# EUROPEAN PATENT APPLICATION

(11) **EP 4 425 858 A1**
(43) Date of publication of application: **04.09.2024**
(21) Application number: 22954655.1
(22) Date of filing: 12.08.2022
(51) Int. Cl.: H04L 27/00, H04W 72/04, H04L 5/14

(54) **DATA TRANSMISSION METHOD AND APPARATUS, AND ELECTRONIC DEVICE**

(71) Applicant: New H3C Technologies Co., Ltd., Hangzhou, Zhejiang 310052 (CN)
(72) Inventor: KONG, Lei, Beijing 100102 (CN)
(74) Representative: Bandpay & Greuter
(86) International application number: PCT/CN2022/112303
(87) International publication number: WO 2024/031703

(57) **Abstract**

The present disclosure provides data transmission methods and apparatuses, and an electronic device. According to an aspect of the present disclosure, the method includes: determining a sub-band full-duplex (SBFD) time-frequency resource in a target slot, and a downlink time-frequency resource for transmitting downlink data in the target slot; where the target slot comprises an uplink (UL) slot, a downlink (DL) slot, or a special (S) slot, and the SBFD time-frequency resource occupies at least one symbol of the target slot in a time domain, and at least one physical resource block for each symbol in a frequency domain; determining, based on a symbol type corresponding to the SBFD time-frequency resource and an overlapping result between the SBFD time-frequency resource and the downlink time-frequency resource, a data transmission operation corresponding to the downlink time-frequency resource; and performing the data transmission operation in the target slot.

## Description

### TECHNICAL FIELD

The present disclosure relates to the field of communication, and in particular to data transmission methods and apparatuses, and an electronic device.

### BACKGROUND

A traditional time-division duplex (TDD) communication system generally operates in a half-duplex (HD) mode. A TDD frame structure can be divided into downlink (DL), special (S) and uplink (UL) slots. The S slots can be used for UL, DL, or guard period (GP).

In full-duplex (FD) communication, data transmission and reception can be performed simultaneously, that is, uplink and downlink data transmission can be performed simultaneously. In the current 5G-Advanced (5G-Adv) system, full-duplex communication is achieved through sub-band full-duplex (SBFD). Specifically, some SBFD time-frequency resources are configured in 5G-Adv time-frequency resources, so that at the same time, data in different directions from other time-frequency resources can be transmitted in the SBFD time-frequency resources.

### SUMMARY

A first aspect of the present disclosure provides a data transmission method, applied to a base station. The method includes: determining a sub-band full-duplex (SBFD) time-frequency resource in a target slot, and a downlink time-frequency resource for transmitting downlink data in the target slot; wherein the target slot comprises an uplink (UL) slot, a downlink (DL) slot, or a special (S) slot, and the SBFD time-frequency resource occupies at least one symbol of the target slot in a time domain, and at least one physical resource block for each symbol in a frequency domain; determining, based on a symbol type corresponding to the SBFD time-frequency resource and an overlapping result between the SBFD time-frequency resource and the downlink time-frequency resource, a data transmission operation corresponding to the downlink time-frequency resource; and performing the data transmission operation in the target slot.

A second aspect of the present disclosure provides a data transmission method, applied to a UE. The method includes: identifying configuration information for sub-band full-duplex (SBFD) time-frequency resources from resource transmission information sent by a base station; in a case where an identification result is that the configuration information is successfully identified, determining, based on the configuration information, a SBFD time-frequency resource in a target slot and a downlink time-frequency resource for receiving downlink data in the target slot; wherein the target slot comprises an uplink (UL) slot, a downlink (DL) slot, or a special (S) slot, and the SBFD time-frequency resource occupies at least one symbol of the target slot in a time domain, and at least one physical resource block for each symbol in a frequency domain; determining, based on an overlapping result between the SBFD time-frequency resource and the downlink time-frequency resource, a data transmission operation corresponding to the downlink time-frequency resource; and performing the data transmission operation in the target slot.

A third aspect of the present disclosure provides a data transmission apparatus, applied to a base station. The apparatus includes: a first determining module, configured to determine a sub-band full-duplex (SBFD) time-frequency resource in a target slot, and a downlink time-frequency resource for transmitting downlink data in the target slot; wherein the target slot comprises an uplink (UL) slot, a downlink (DL) slot, or a special (S) slot, and the SBFD time-frequency resource occupies at least one symbol of the target slot in a time domain, and at least one physical resource block for each symbol in a frequency domain; a second determining module, configured to determine, based on a symbol type corresponding to the SBFD time-frequency resource and an overlapping result between the SBFD time-frequency resource and the downlink time-frequency resource, a data transmission operation corresponding to the downlink time-frequency resource; and a performing module, configured to perform the data transmission operation in the target slot.

A fourth aspect of the present disclosure provides a data transmission apparatus, applied to a user device UE. The apparatus includes: an identifying module, configured to identify configuration information for sub-band full-duplex (SBFD) time-frequency resources from resource transmission information sent by a base station; a first determining module, configured to, in a case where an identification result is that the configuration information is successfully identified, determine, based on the configuration information, a SBFD time-frequency resource in a target slot and a downlink time-frequency resource for receiving downlink data in the target slot; wherein the target slot comprises an uplink (UL) slot, a downlink (DL) slot, or a special (S) slot, and the SBFD time-frequency resource occupies at least one symbol of the target slot in a time domain, and at least one physical resource block for each symbol in a frequency domain; a second determining module, configured to determine, based on an overlapping result between the SBFD time-frequency resource and the downlink time-frequency resource, a data transmission operation corresponding to the downlink time-frequency resource; and a performing module, configured to perform the data transmission operation in the target slot.

A fifth aspect of the present disclosure provides an electronic device, including at least one processor, and a machine readable storage medium storing machine executable instructions; where by reading the machine executable instructions, the at least one processor is caused to perform the method as described in any one of the above aspects.

Based on the above technical solution, the scheduling mechanism for the downlink SSB, PDCCH and reference signals on the SBFD time-frequency resource can be determined. For UEs with different capabilities, the mechanism for transmitting the downlink SSB, PDCCH and reference signals in the SBFD time-frequency resource is different. Through the technical solution of the present disclosure, it is possible to clarify the transmission mechanism of the base station and UEs for the downlink SSB, PDCCH and reference signal in SBFD time-frequency resource in case of conflicts with other resources, so that the behavior ambiguity of the base station and the UEs can be avoided in this case, and it can be ensured that the base station and UEs can transmit the SSB, PDCCH and downlink reference signal normally in the full-duplex mode.

### BRIEF DESCRIPTION OF THE DRAWINGS

FIG. 1 is a flowchart illustrating a data transmission method according to an embodiment of the present disclosure.
FIG. 2 is a schematic diagram illustrating overlapping between sub-band full-duplex (SBFD) time-frequency resources and synchronization signal blocks (SSBs) according to an embodiment of the present disclosure.
FIG. 3 is a schematic diagram illustrating overlapping between SBFD time-frequency resources and SSBs according to an embodiment of the present disclosure.
FIG. 4 is a schematic diagram illustrating overlapping between SBFD time-frequency resources and control resource sets (CORESETs) according to an embodiment of the present disclosure.
FIG. 5 is a schematic diagram illustrating overlapping between SBFD time-frequency resources and CORESETs according to an embodiment of the present disclosure.
FIG. 6 is a schematic diagram illustrating overlapping between SBFD time-frequency resources and CORESETs according to an embodiment of the present disclosure.
FIG. 7 is a schematic structural diagram illustrating a data transmission apparatus according to an embodiment of the present disclosure.
FIG. 8 is a schematic structural diagram illustrating an electronic device according to an embodiment of the present disclosure.

### DETAILED DESCRIPTION OF THE EMBODIMENTS

Terms used in the embodiments of the present disclosure are for the purpose of describing specific embodiments only, and are not intended to limit the present disclosure. The singular forms "a" ("an"), "the" and "this" used in the embodiments of the present disclosure and the appended claims are also intended to include plural forms, unless the context clearly indicates other meanings. It should also be understood that the term "and/or" as used herein refers to and includes any and all possible combinations of one or more of the associated listed items.

It should be understood that although terms first, second, third, etc. may be used in the embodiments of the present disclosure to describe various information, such information should not be limited to these terms. These terms are only used to distinguish the same type of information from each other. For example, first information may also be referred to as second information, and similarly, the second information may also be referred to as the first information without departing from the scope of the present disclosure. Depending on the context, the word "if" as used herein can be interpreted as "at the time of", "when" or "in response to determining".

The technical solution in the embodiments of the present disclosure will be described clearly and completely in combination with accompanying drawings. Obviously, the described embodiments are only a part of the embodiments of the present disclosure, not all of them. Based on the embodiments in the present disclosure, all other embodiments obtained by ordinary technicians in this field without creative labor fall within the protection scope of the present disclosure.

In terms of slots, a traditional time-division duplex (TDD) frame structure can be divided into uplink (UL), downlink (DL) and special (S) slots. Symbols in the UL slot are configured as the UL for uplink data transmission. Symbols in the DL slot are configured as the DL for downlink data transmission. Symbols in the S slot can be configured as UL, DL and flexible (F), and the F symbol can be used for UL, DL or guard period (GP).

In traditional TDD communication systems, for some downlink channel transmission cases, for example, transmission of a synchronization signal block (SSB), a physical downlink control channel (PDCCH), a physical downlink share channel (PDSCH), a channel state information reference signal (CSI-RS) and a positioning reference signal (PRS) can only be carried out in the DL symbol or F symbol in corresponding DL and S slots. However, such downlink data cannot be transmitted in the UL symbol in UL and S slots. When configuring a frame structure mainly based on uplink, the transmission occasion of downlink data will be greatly limited.

In the current 5G-Advanced (5G-Adv) system, by configuring some sub-band full-duplex (SBFD) time-frequency resources are configured in time-frequency resources, it is expected that at the same time, data in different directions from other time-frequency resources can be transmitted in the SBFD time-frequency resources. For example, it is expected that downlink data such as SSB, PDCCH, CSI-RS/PRS can be transmitted in a SBFD time-frequency resource configured in an uplink slot. However, the SBFD time-frequency resources will introduce additional self-interference (SI), neighbor interference, and other factors that affect communication quality. Therefore, when using the SBFD time-frequency resources for downlink transmission, it is necessary to consider the impact of the downlink transmission on the current 5G uplink channels and signal transmission, so as to determine the scheduling and transmission strategy of downlink channels and signals in the SBFD time-frequency resources. However, the current 5G-Adv protocol does not provide any effective proposals for downlink/uplink transmission in SBFD time-frequency resources and whether this transmission will conflict with the existing resource scheduling strategy. Regarding SBFD, meeting documents R1-2203157 and R1-2203204 of 3GPP TSG-RAN WG1 can be referred to for more information.

Based on this, the present disclosure provides a technology for downlink channel transmission in SBFD time-frequency resources. In this specification, the solution of the present disclosure is described mainly by combining transmission examples of SSB, PDCCH, CSI-RS, and PRS in a SBFD time-frequency resource. In the solution of the present disclosure, based on overlapping between a time-frequency resource actually used by downlink channels and signals and an uplink time-frequency resource, and the capability of a user equipment (UE) (whether FD is supported), an appropriate transmission strategy is selected for data transmission in the SBFD time-frequency resource. By clarifying the transmission strategy of a base station and a UE for downlink common channels and reference signals in the SBFD time-frequency resource, the solution of the present disclosure can achieve downlink transmission based on SBFD in the current 5G-Adv system, thereby improving the overall performance of the 5G communication system. At the same time, the solution of the present disclosure also considers the compatibility with UEs that do not support SBFD, and provides the corresponding processing strategy for the configuration of the SBFD time-frequency resource for such UEs.

The solution of the present disclosure will be explained with examples.

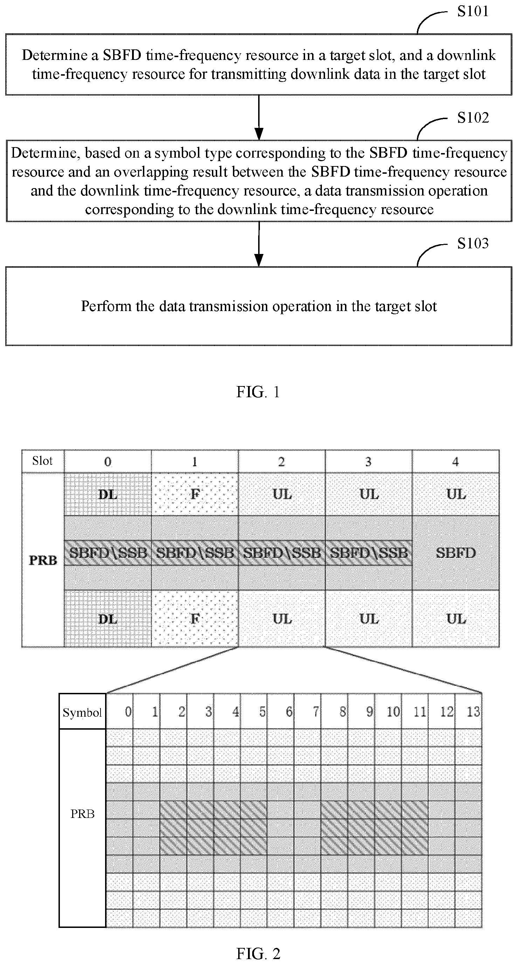

An example of the present disclosure provides a data transmission method that can be applied to a base station. FIG. 1 is a flowchart of the data transmission method. The method can include the following steps 101 to 103.

Step 101: a sub-band full-duplex (SBFD) time-frequency resource in a target slot, and a downlink time-frequency resource for transmitting downlink data in the target slot are determined; where the target slot is a UL slot, a DL slot, or an S slot, and the SBFD time-frequency resource occupies at least one symbol of the target slot in a time domain, and at least one physical resource block for each symbol in a frequency domain.

Step 102: based on a symbol type corresponding to the SBFD time-frequency resource and an overlapping result between the SBFD time-frequency resource and the downlink time-frequency resource, a data transmission operation corresponding to the downlink time-frequency resource is determined.

Step 103: the determined data transmission operation is performed in the target slot.

The target slot in step 101 can be understood as the current concern slot, which can be any slot configured with the SBFD time-frequency resource. The SBFD time-frequency resource can be configured in a UL slot, a DL slots, or an S slot. Therefore, the target slot can be the UL slot, DL slot, or S slot. Taking the UL slot as an example, the SBFD time-frequency resource can be configured in all or part of UL symbols in the UL slot. In the frequency domain, for each UL symbol, the SBFD time-frequency resource can occupy at least one physical resource block (PRB) on the symbol. This physical resource block can be defined in bandwidth part (BWP), which is a resource for actual transmission. In each BWP, the physical resource block is numbered according to predefined indexing rules. The situation of DL and S slots is similar to that of the UL slot.

The downlink time-frequency resource corresponding to the target slot refer to a time-frequency resource used to send downlink data under the existing 5G communication mechanism, such as SSB, PDCCH, CSI-RS, PRS, and other corresponding time-frequency resources. The downlink time-frequency resource and the SBFD time-frequency resource may overlap, including partial overlap and complete overlap. In this specification, "partial overlap" and "complete overlap" appear many times. Unless otherwise stated, the "partial overlap" may be partial overlap in the time domain, partial overlap in the frequency domain, or partial overlap in the time-frequency domain; the "complete overlap" refers to the downlink time-frequency resource falling into the SBFD time-frequency resource. In step 102, based on the symbol type (the UL, DL or F symbol) corresponding to the SBFD time-frequency resource and the overlapping result between the SBFD time-frequency resource and the downlink time-frequency resource, the data transmission operation corresponding to the downlink time-frequency resource may be determined, for example, whether the downlink channel/signal transmission can be carried out.

The 5G-Adv full-duplex communication system increases the use of the SBFD time-frequency resource on the basis of the existing 5G (5th Generation Mobile Communication Technology) communication system. Except for the part related to the configuration of the SBFD time-frequency resource, the strategy for resource scheduling and channel transmission remain is unchanged. The existing 5G-Adv protocol does not consider the problem that the use of the SBFD time-frequency resource may conflict with the original strategy. However, the data transmission method in this example can consider overlapping between the time-frequency resource actually used by downlink channels and signals and the configured SBFD time-frequency resource to provide a clear data transmission strategy for the SBFD-based 5G-Adv full-duplex communication system, so as to achieve full-duplex communication between the base station and UE based on SBFD.

In this example, the data transmission method is described from the perspective of the base station. On the UE side, based on configuration information for SBFD time-frequency resources sent by the base station, the SBFD time-frequency resource in the target slot can be determined, and then whether to receive downlink data can be determined according to overlapping between the SBFD time-frequency resource and the downlink time-frequency resource.

The SBFD time-frequency resource can be semi-statically configured through high-level radio resource control (RRC) signaling, or dynamically configured through downlink control information (DCI).

For the UE without SBFD capability, if the SBFD time-frequency resource is semi-statically configured, the UE will ignore all SBFD time-frequency resource configurations. If the SBFD time-frequency resource is dynamically configured, the UE does not expect the base station to configure the SBFD time-frequency resource for it. If configured, the UE will ignore this configuration. The "ignore" herein indicates that the UE cannot recognize the SBFD time-frequency resource configuration.

For the UE with SBFD capability, there are two types: one is a half-duplex UE, that is, the UE can transmit or receive on a SBFD time-frequency resource, but can only transmit or receive at the same time, which is called HD UE; the other is a full-duplex UE, that is, the UE can transmit and receive on a SBFD time-frequency resource at the same time, which is called FD UE. When turning on the half-duplex mode, the UE can be used as a half-duplex UE, and when turning on the full-duplex mode, the UE can be used as a full-duplex UE. In the solution of the present disclosure, the UE with SBFD capability is mainly considered, including HD UE and FD UE.

The data transmission method according to the example of the present disclosure is described above with reference to FIG. 1. Based on specific examples of downlink channel transmission, each step of the data transmission method is further described below.

Transmission of synchronization signal block (SSB) in SBFD time-frequency resource:

In an example of the present disclosure, the downlink data in step 101 includes data carried by the SSB, and the downlink time-frequency resource is a SSB time-frequency resource corresponding to the SSB. In step 102, determining, based on the symbol type corresponding to the SBFD time-frequency resource and the overlapping result between the SBFD time-frequency resource and the downlink time-frequency resource, the data transmission operation corresponding to the downlink time-frequency resource, including: in a case where a symbol corresponding to the SBFD time-frequency resource is a DL symbol or a flexible (F) symbol, if the overlapping result is that the downlink time-frequency resource is located in the SBFD time-frequency resource or partially overlaps with the SBFD time-frequency resource, determining that the data transmission operation corresponding to the downlink time-frequency resource is: transmitting the downlink data based on the SSB time-frequency resource.

In the current 5G communication system, SSB is used for synchronization between base stations and the UE, and transmits master information block (MIB) including cell key information. Therefore, correct reception of SSB by the UE is the basis for normal communication.

As mentioned above, the SBFD time-frequency resource can flexibly schedule uplink and downlink transmission, which can be dynamically configured or semi-statically configured. When dynamically configuring the SBFD time-frequency resource, as the base station clearly knows the location of the SSB, in order to ensure that the UE can receive the SSB normally to complete synchronization and receive the cell key information, the base station should avoid dynamically configuring the SBFD time-frequency resource in the time-frequency resource occupied by the SSB. From the perspective of UE, UE also does not expect the base station to dynamically configure the SBFD time-frequency resource on the time-frequency resource that overlaps with the SSB.

On the semi-statically configured SBFD time-frequency resource, any downlink transmission, including SSB transmission, can be scheduled. If the SBFD time-frequency resource and the SSB time-frequency resource do not overlap at all, the base station can only send the SSB in a non-uplink symbol, and the UE can also receive the SSB in the corresponding non-uplink symbol. When the SSB time-frequency resource overlaps with the semi-statically configured SBFD time-frequency resource, i.e., partially or completely overlap (the SSB time-frequency resource is located in the SBFD time-frequency resource), if the SBFD time-frequency resource is configured in the downlink symbol, the base station needs to send the SSB normally, and the SBFD-supported UE needs to receive the SSB normally.

For the SBFD time-frequency resource configured in F or UL symbol, it is necessary to discuss based on overlapping between SBFD time-frequency resource and the SSB.

In an example of the present disclosure, the downlink data in step 101 includes data carried by the SSB, and the downlink time-frequency resource is the SSB time-frequency resource corresponding to the SSB. In step 102, determining, based on the symbol type corresponding to the SBFD time-frequency resource and the overlapping result between the SBFD time-frequency resource and the downlink time-frequency resource, the data transmission operation corresponding to the downlink time-frequency resource, including: in a case where a symbol corresponding to the SBFD time-frequency resource is a F symbol, if the overlapping result is that the downlink time-frequency resource is located in the SBFD time-frequency resource or partially overlaps with the SBFD time-frequency resource, determining that the data transmission operation corresponding to the downlink time-frequency resource is: transmitting the downlink data based on the SSB time-frequency resource.

FIG. 2 is a schematic diagram illustrating overlapping between SBFD time-frequency resources and SSBs according to an example. As shown in FIG. 2, the semi-statically configured SBFD time-frequency resources completely overlaps with SSB time-frequency resources, that is, the SSB time-frequency resources are located in the SBFD time-frequency resources. F represents a flexible slot, which can be used for uplink or downlink, DL represents a downlink slot, and UL represents an uplink slot. In addition, a detailed configuration example of the SSB time-frequency resource and the SBFD time-frequency resource in slot 2 is also shown in FIG. 2, with a shaded area indicating complete overlapping between the SSB time-frequency resource and the SBFD time-frequency resource. When the SSB time-frequency resource is completely in the semi-statically configured SBFD time-frequency resource, the base station sends the SSB normally on the SSB time-frequency resource in the flexible symbol. For HD UE and FD UE, the SSB is also received on the SSB time-frequency resource in the flexible symbol.

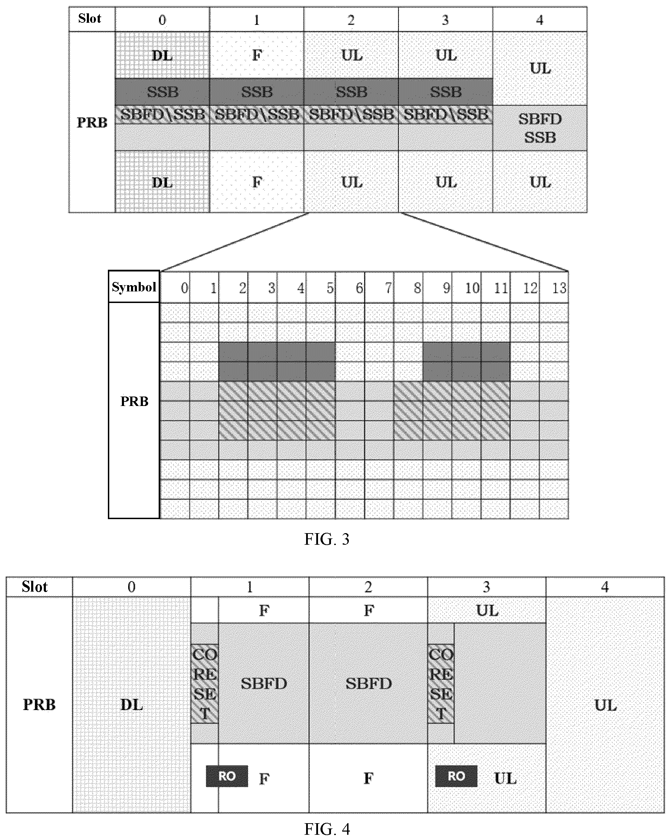

FIG. 2 is a schematic diagram illustrating overlapping between SBFD time-frequency resources and SSBs according to an example. As shown in FIG. 3, the SSB time-frequency resources partially overlap with the semi-statically configured SBFD time-frequency resources. In slots 0 to 3, SBFD time-frequency resources partially overlap with the SSB time-frequency resources. A detailed example is shown in FIG. 3.

In the flexible symbol, as shown in slot 1 of FIG. 3, the base station sends the SSB normally in the time-frequency resource occupied by the SSB (SSB time-frequency resource). For HD UE and FD UE, the SSB is also received on the time-frequency resource occupied by the SSB in the flexible symbol.

In an example of the present disclosure, the downlink data in step 101 includes data carried by the SSB, and the downlink time-frequency resource is the SSB time-frequency resource corresponding to the SSB. In step 102, determining, based on the symbol type corresponding to the SBFD time-frequency resource and the overlapping result between the SBFD time-frequency resource and the downlink time-frequency resource, the data transmission operation corresponding to the downlink time-frequency resource, including: in a case where a symbol corresponding to the SBFD time-frequency resource is an UL symbol, if the overlapping result is that the SSB time-frequency resource is located in the SBFD time-frequency resource, determining that the data transmission operation corresponding to the downlink time-frequency resource is: transmitting the downlink data based on the SSB time-frequency resource.

In an example of the present disclosure, the downlink data in step 101 includes data carried by the SSB, and the downlink time-frequency resource is the SSB time-frequency resource corresponding to the SSB. Determining, based on the symbol type corresponding to the SBFD time-frequency resource and the overlapping result between the SBFD time-frequency resource and the downlink time-frequency resource, the data transmission operation corresponding to the downlink time-frequency resource, including: in a case where a symbol corresponding to the SBFD time-frequency resource is an UL symbol, if the overlapping result is that the SSB time-frequency resource partially overlaps with the SBFD time-frequency resource, determining that the data transmission operation corresponding to the downlink time-frequency resource is: prohibiting transmitting the downlink data.

As shown in FIG. 2, when the time-frequency resource occupied by the SSB is completely in the semi-statically configured SBFD time-frequency resource, the base station sends the SSB normally on the time-frequency resource occupied by the SSB in the uplink symbol. For HD UE and FD UE, the SSB is also received on the time-frequency resource occupied by the SSB in the uplink symbol.

As shown in FIG. 3, there is a partial overlap between SSB time-frequency resources and SBFD time-frequency resources. If the SBFD time-frequency resource is configured in the uplink symbol, since the SSB time-frequency resource conflicts with the time-frequency resource for sending uplink data, the base station should not send the SSB, and HD UE and FD UE will not receive the SSB. To avoid this situation, the base station should configure all SSBs in the downlink symbol or flexible symbol when configuring SSBs. If an SSB is to be configured in an uplink symbol, it is necessary to additionally configure a SBFD time-frequency resource and configure the SSB in the SBFD time-frequency resource. If the SBFD time-frequency resource is insufficient to send the SSB, the SSB cannot be configured in the SBFD time-frequency resource in the uplink symbol.

Physical downlink control channel (PDCCH) transmission in a SBFD time-frequency resource:

In an example of the present disclosure, the downlink data in step 101 includes data carried by the PDCCH, and the downlink time-frequency resource is a control resource set (CORESET) corresponding to the PDCCH. In step 102, determining, based on the symbol type corresponding to the SBFD time-frequency resource and the overlapping result between the SBFD time-frequency resource and the downlink time-frequency resource, the data transmission operation corresponding to the downlink time-frequency resource, including: in a case where a symbol corresponding to the SBFD time-frequency resource is a DL symbol, if the overlapping result is that the CORESET partially overlaps with the SBFD time-frequency resource or is located in the SBFD time-frequency resource, determining that the data transmission operation corresponding to the downlink time-frequency resource is: transmitting the downlink data based on the CORESET.

In the current 5G communication system, PDCCH is used to transmit control information of system information, user group information, user scheduling information and the like. Only when receiving the control information first can the UE further receive the system information, group information and user scheduling information according to the control information. The time-frequency resource occupied by the PDCCH is called the control resource set (CORESET), which is semi-statically configured through RRC signaling. According to different functions, CORESET is divided into common CORESET and UE-specific CORESET. Common CORESET is further divided into CORESET0 and other common CORESET. The former is used to transmit control information related to a system information block type 1 (SIB 1) message, and the latter is mainly used to transmit control information of paging messages, other system messages, random access and the like. UE-specific CORESET is used to transmit user scheduling information. Among all CORESETs, CORESET0 is more important than other CORESETs.

The dynamically configured SBFD time-frequency resource is firstly discussed. For each CORESET, both the base station and UE can be clear about the time-frequency resource the CORESET occupies. When dynamically configuring the SBFD time-frequency resource, the SBFD time-frequency resource is configured through DCI, which is sent in a PDCCH using a CORESET time-frequency resource. So when dynamically configuring the SBFD time-frequency resource, the base station should avoid configuring the SBFD time-frequency resource in the time-frequency resource occupied by the CORESET. From the perspective of UE, UE does not expect the base station to dynamically configure the SBFD time-frequency resource on the time-frequency resource that overlaps with the CORESET.

On the semi-statically configured SBFD time-frequency resource, any downlink transmission, including PDCCH transmission, can be scheduled. If the semi-statically configured SBFD time-frequency resource and the CORESET do not overlap at all, the base station can only send the PDCCH in the CORESET in a non-uplink symbol, and UE can also perform PDCCH blind detection in the CORESET in corresponding non-uplink symbol according to the configuration.

When semi-statically configuring the SBFD time-frequency resource through upper layer RRC signaling, there may be cases where the SBFD time-frequency resource overlaps with the CORESET. When sending a PDCCH on a CORESET that overlaps with the semi-statically configured SBFD time-frequency resource, if the CORESET is on a downlink symbol, the base station needs to send the PDCCH normally in the CORESET, and the SBFD-supported UE perform PDCCH blind detection in the CORESET in corresponding downlink symbol according to the configuration.

In an example of the present disclosure, the downlink data in step 101 includes data carried by the PDCCH, and the downlink time-frequency resource is a CORESET corresponding to the PDCCH. In step 102, determining, based on the symbol type corresponding to the SBFD time-frequency resource and the overlapping result between the SBFD time-frequency resource and the downlink time-frequency resource, the data transmission operation corresponding to the downlink time-frequency resource, including: in a case where a symbol corresponding to the SBFD time-frequency resource is a F symbol, if the overlapping result is that the CORESET partially overlaps with the SBFD time-frequency resource or is located in the SBFD time-frequency resource, and the CORESET is a common CORESET, determining that the data transmission operation corresponding to the downlink time-frequency resource is: transmitting the downlink data based on the CORESET.

In an example of the present disclosure, the downlink data in step 101 includes data carried by the PDCCH, and the downlink time-frequency resource is a CORESET corresponding to the PDCCH. In step 102, determining, based on the symbol type corresponding to the SBFD time-frequency resource and the overlapping result between the SBFD time-frequency resource and the downlink time-frequency resource, the data transmission operation corresponding to the downlink time-frequency resource, including: in a case where a symbol corresponding to the SBFD time-frequency resource is a F symbol, if the overlapping result is that the CORESET partially overlaps with the SBFD time-frequency resource or is located in the SBFD time-frequency resource, and the CORESET is a UE-specific CORESET, when the CORESET overlaps with a random access channel occasion (RO) in the target slot in the time domain, if a UE to receive the downlink data is in a full-duplex time-division duplex (TDD) mode, determining that the data transmission operation corresponding to the downlink time-frequency resource is: transmitting the downlink data based on the CORESET; or, when the CORESET and the RO do not overlap in the time domain, determining that the data transmission operation corresponding to the downlink time-frequency resource is: transmitting the downlink data based on the CORESET. In this specification, a random access channel occasion (RO) should be understood as including the RO itself and N_{Gap} gap symbols in front of it, which is understood from the time domain because the RO is configured in a symbol in the time domain. The value of N_{Gap} can be determined by configuration information sent by the base station, and the value of N_{Gap} can also be 0. Whether the CORESET and the RO overlap or not in time domain means that the time-frequency resource occupied by the CORESET and the RO overlap or not in time domain.

In an example of the present disclosure, the downlink data in step 101 includes data carried by the PDCCH, and the downlink time-frequency resource is a CORESET corresponding to the PDCCH. In step 102, determining, based on the symbol type corresponding to the SBFD time-frequency resource and the overlapping result between the SBFD time-frequency resource and the downlink time-frequency resource, the data transmission operation corresponding to the downlink time-frequency resource, including: in a case where a symbol corresponding to the SBFD time-frequency resource is a F symbol, if the overlapping result is that the CORESET partially overlaps with the SBFD time-frequency resource or is located in the SBFD time-frequency resource, and the CORESET is a UE-specific CORESET, then when the CORESET overlaps with a random access channel occasion (RO) in the target slot in the time domain, if a UE to receive the downlink data is in a half-duplex time-division duplex (TDD) mode, determining that the data transmission operation corresponding to the downlink time-frequency resource is: prohibiting using the CORESET to transmit the downlink data.

In the case of transmitting the PDCCH in the common CORESET in the F symbol overlaps (partially or completely) with the semi-statically configured SBFD time-frequency resource, the base station sends the PDCCH in the common CORESET. Correspondingly, the SBFD-supported UE perform PDCCH blind detection in the CORESET in corresponding flexible symbol according to the configuration.

In the case of transmitting the PDCCH in UE-specific CORESET in the F symbol overlaps (partially or completely) with the semi-statically configured SBFD time-frequency resource, if the UE-specific CORESET overlaps with the current physical random access channel (PRACH) transmission occasion (RACH occupation: RO) in the time-domain resource, that is, there is an overlap in symbol, as shown in slot 1 in FIG. 4, for an HD UE, the base station does not send the PDCCH in the UE-specific CORESET, and the HD UE does not perform PDCCH blind detection in the UE-specific CORESET; for an FD UE, the base station can send the PDCCH in the UE-specific CORESET, and the FD UE can also perform PDCCH blind detection in the UE-specific CORESET. If the UE-specific CORESET and the RO do not overlap in the time domain, for all UEs that support SBFD, the base station sends the PDCCH in the UE-specific CORESET, and the UEs also perform PDCCH blind detection in the UE-specific CORESET.

Regarding whether a UE is an HD UE or an FD UE, during the process of the UE accessing a network, the base station will send a message to the UE to inquire about capabilities of the UE. Upon receiving the message, the UE will report its own capabilities to the base station, so that the base station can know whether the UE has SBFD capability and whether the UE is an HD UE or an FD UE.

In an example of the present disclosure, the downlink data in step 101 includes data carried by the PDCCH, and the downlink time-frequency resource is a CORESET corresponding to the PDCCH. In step 102, determining, based on the symbol type corresponding to the SBFD time-frequency resource and the overlapping result between the SBFD time-frequency resource and the downlink time-frequency resource, the data transmission operation corresponding to the downlink time-frequency resource, including: in a case where a symbol corresponding to the SBFD time-frequency resource is an UL symbol, if the overlapping result is that the CORESET is located in the SBFD time-frequency resource, then when the CORESET overlaps with a random access channel occasion (RO) in the target slot in the time domain, if a UE to receive the downlink data is in a full-duplex time-division duplex (TDD) mode, determining that the data transmission operation corresponding to the downlink time-frequency resource is: transmitting the downlink data based on the CORESET.

In an example of the present disclosure, the downlink data in step 101 includes data carried by the PDCCH, and the downlink time-frequency resource is a CORESET corresponding to the PDCCH. In step 102, determining, based on the symbol type corresponding to the SBFD time-frequency resource and the overlapping result between the SBFD time-frequency resource and the downlink time-frequency resource, the data transmission operation corresponding to the downlink time-frequency resource, including: in a case where a symbol corresponding to the SBFD time-frequency resource is an UL symbol, if the overlapping result is that the CORESET is located in the SBFD time-frequency resource, then when the CORESET overlaps with a random access channel occasion (RO) in the target slot in the time domain, if a UE to receive the downlink data is in a half-duplex time-division duplex (TDD) mode, determining that the data transmission operation corresponding to the downlink time-frequency resource is: prohibiting using the CORESET to transmit the downlink data.

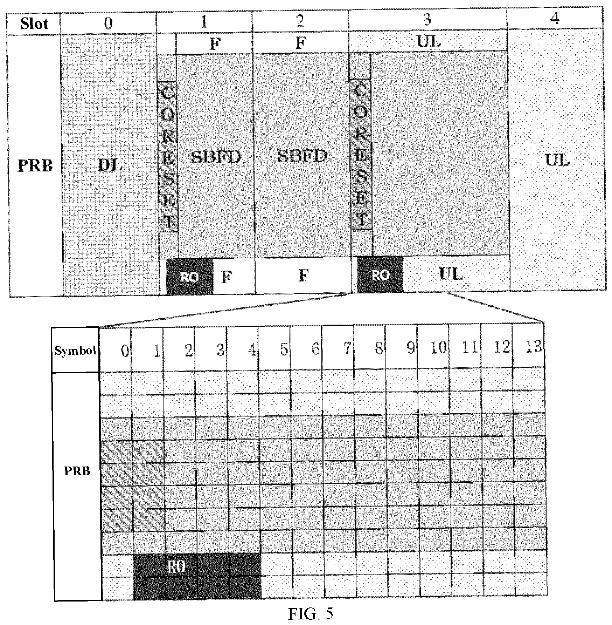

FIG. 5 is a schematic diagram illustrating overlapping between SBFD time-frequency resources and CORESETs according to an example. As shown in FIG. 5, the CORESET time-frequency resources completely overlap with the semi-statically configured SBFD time-frequency resources. In the first two symbols of slots 1 and 3, the CORESET is completely included in the SBFD time-frequency resource. If the CORESET overlaps with the RO in time-domain resource, that is, there is an overlap in symbol, as shown in slot 3 in FIG. 5, for an HD UE, the base station does not send the PDCCH in the CORESET, and the HD UE does not perform PDCCH blind detection in the CORESET; for an FD UE, the base station can send the PDCCH in the CORESET, and the FD UE can also perform PDCCH blind detection in the CORESET.

In an example of the present disclosure, the downlink data in step 101 includes data carried by the PDCCH, and the downlink time-frequency resource is a CORESET corresponding to the PDCCH. In step 102, determining, based on the symbol type corresponding to the SBFD time-frequency resource and the overlapping result between the SBFD time-frequency resource and the downlink time-frequency resource, the data transmission operation corresponding to the downlink time-frequency resource, including: in a case where a symbol corresponding to the SBFD time-frequency resource is an UL symbol, if the overlapping result is that the CORESET is located in the SBFD time-frequency resource, then when the CORESET and a random access channel occasion (RO) in the target slot do not overlap in the time domain, if the CORESET is a common CORESET, determining that the data transmission operation corresponding to the downlink time-frequency resource is: transmitting the downlink data based on the CORESET; or when the CORESET and the RO do not overlap in the time domain, if the CORESET is a UE-specific CORESET, and a UE to receive the downlink data is in a full-duplex time-division duplex (TDD) mode, determining that the data transmission operation corresponding to the downlink time-frequency resource is: transmitting the downlink data based on the CORESET.

In an example of the present disclosure, the downlink data in step 101 includes data carried by the PDCCH, and the downlink time-frequency resource is a CORESET corresponding to the PDCCH. In step 102, determining, based on the symbol type corresponding to the SBFD time-frequency resource and the overlapping result between the SBFD time-frequency resource and the downlink time-frequency resource, the data transmission operation corresponding to the downlink time-frequency resource, including: in a case where a symbol corresponding to the SBFD time-frequency resource is an UL symbol, if the overlapping result is that the CORESET is located in the SBFD time-frequency resource, then when the CORESET and a random access channel occasion (RO) in the target slot do not overlap in the time domain, if the CORESET is a user equipment (UE)-specific CORESET, and a UE to receive the downlink data is in a half-duplex time-division duplex (TDD) mode, determining that the data transmission operation corresponding to the downlink time-frequency resource is: prohibiting using the CORESET to transmit the downlink data.

When the CORESET and the RO do not overlap in the time domain, if the CORESET is a common CORESET, the base station will send the PDCCH normally on the time-frequency resource occupied by the CORESET. The SBFD-supported UE performs PDCCH blind detection in the CORESET time-frequency resource in one or more symbols occupied by the CORESET. If the CORESET is a UE-specific COREST, the base station will send the PDCCH normally to the FD UE on the time-frequency resource occupied by the CORESET, while not to the HD UE. Correspondingly, the FD UE performs PDCCH blind detection in the CORESET time-frequency resource in one or more symbols occupied by the CORESET, and the HD UE does not perform PDCCH blind detection in the CORESET time-frequency resource.

In an example of the present disclosure, the downlink data in step 101 includes data carried by the PDCCH, and the downlink time-frequency resource is a CORESET corresponding to the PDCCH. In step 102, determining, based on the symbol type corresponding to the SBFD time-frequency resource and the overlapping result between the SBFD time-frequency resource and the downlink time-frequency resource, the data transmission operation corresponding to the downlink time-frequency resource, including: in a case where a symbol corresponding to the SBFD time-frequency resource is an UL symbol, if the overlapping result is that the CORESET partially overlaps with the SBFD time-frequency resource, determining that the data transmission operation corresponding to the downlink time-frequency resource is: prohibiting transmitting the downlink data.

In an example of the present disclosure, the downlink data in step 101 includes data carried by the PDCCH, and the downlink time-frequency resource is a CORESET corresponding to the PDCCH. In step 102, determining, based on the symbol type corresponding to the SBFD time-frequency resource and the overlapping result between the SBFD time-frequency resource and the downlink time-frequency resource, the data transmission operation corresponding to the downlink time-frequency resource, including: in a case where a symbol corresponding to the SBFD time-frequency resource is an UL symbol, if the overlapping result is that the CORESET partially overlaps with the SBFD time-frequency resource, then if a UE to receive the downlink data is in a full-duplex time-division duplex (TDD) mode, determining that the data transmission operation corresponding to the downlink time-frequency resource is: transmitting the downlink data based on a first target resource; where the first target resource is an overlapping time-frequency resource between the CORESET and the SBFD time-frequency resource, where a size of the first target resource is greater than or equal to a size of the downlink data.

In an example of the present disclosure, the downlink data in step 101 includes data carried by the PDCCH, and the downlink time-frequency resource is a CORESET corresponding to the PDCCH. In step 102, determining, based on the symbol type corresponding to the SBFD time-frequency resource and the overlapping result between the SBFD time-frequency resource and the downlink time-frequency resource, the data transmission operation corresponding to the downlink time-frequency resource, including: in a case where a symbol corresponding to the SBFD time-frequency resource is an UL symbol, if the overlapping result is that the CORESET partially overlaps with the SBFD time-frequency resource, and a UE to receive the downlink data is in a full-duplex time-division duplex (TDD) mode, then if a first target resource overlaps with a random access channel occasion (RO) in the target slot, when a size of a second target resource is greater than or equal to a size of the downlink data, determining that the data transmission operation corresponding to the downlink time-frequency resource is: transmitting the downlink data based on the second target resource; where the first target resource is an overlapping time-frequency resource between the CORESET and the SBFD time-frequency resource, and the second target resource is a time-frequency resource in the first target resource that does not overlap with the RO.

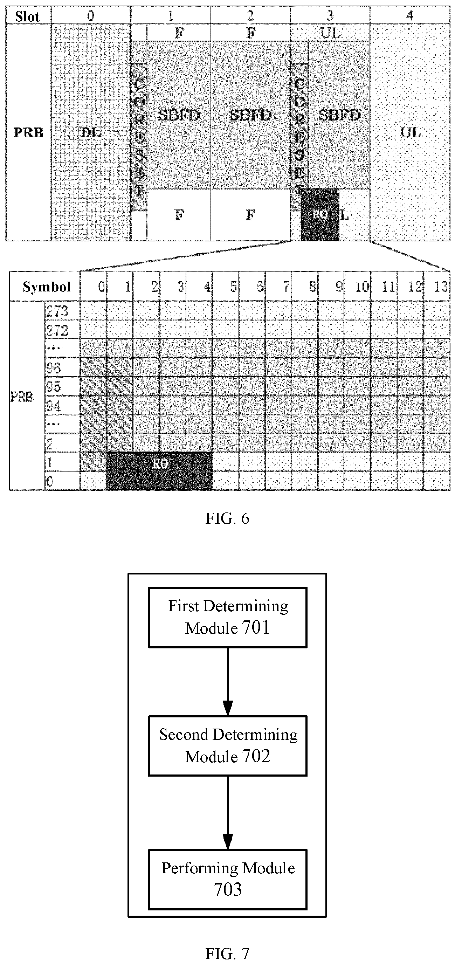

FIG. 6 is a schematic diagram illustrating overlapping between SBFD time-frequency resources and CORESETs according to an example. As shown in FIG. 6, the semi-statically configured SBFD time-frequency resources partially overlap with the CORESETs. In the first two symbols (symbol 0, symbol 1) in slots 1 and 3, the SBFD time-frequency resource partially overlaps with the CORESET.

In the uplink symbol, since the time-frequency resource occupied by the CORESET only partially occupy the SBFD time-frequency resource, there is a situation where the CORESET overlaps with other uplink time-frequency resources. In this case, there are two solutions for transmitting the PDCCH:

Solution 1: the base station does not send the PDCCH. In this solution, due to the overlap between the CORESET and the uplink time-frequency resource, to avoid conflicts, the base station does not send the PDCCH on the CORESET time-frequency resource, and all types of UE (FD or HD UEs) will not perform PDCCH blind detection on the CORESET that overlaps with the uplink time-frequency resource.

Solution 2: the base station sends the PDCCH in the CORESET time-frequency resource that does not overlap with uplink time-frequency resource. This solution is only applicable to an FD UE. If the CORESET overlaps with the RO, the base station determines, based on the configuration of the CORESET in the SBFD time-frequency resource and the position of RO, the size of the part of the CORESET resource located in the SBFD time-frequency resource that does not overlap with the RO. If the part of the CORESET resource is sufficient to send the PDCCH, the base station sends the PDCCH in the part of the CORESET resource. Otherwise, the base station will not send the PDCCH on the CORESET resource in the SBFD time-frequency resource. For an FD UE, PDCCH blind detection is performed in the part of the CORESET resource located in the SBFD time-frequency resource that does not overlap with the RO, as shown in symbol 0 and PRBs 2 to 96 in symbol 1 of slot 3 in FIG. 6.

If the CORESET does not overlap with the RO, the base station determines, based on the configuration of the CORESET in the SBFD time-frequency resource, the size of the part of the CORESET resource located in the SBFD time-frequency resource. If the part of the CORESET resource is sufficient to send the PDCCH, the base station sends the PDCCH in the part of the CORESET resource. Otherwise, the base station will not send the PDCCH on the CORESET resource in the SBFD time-frequency resource. For an FD UE, PDCCH blind detection is performed in the part of the CORESET resource in the SBFD time-frequency resource.

### Transmission of a reference signal in a SBFD time-frequency resource:

In an example of the present disclosure, the downlink data in step 101 includes a downlink channel state indication reference signal (CSI-RS) or a downlink positioning reference signal (PRS), and the downlink time-frequency resource is a reference signal time-frequency resource corresponding to the CSI-RS or PRS. In step 102, determining, based on the symbol type corresponding to the SBFD time-frequency resource and the overlapping result between the SBFD time-frequency resource and the downlink time-frequency resource, the data transmission operation corresponding to the downlink time-frequency resource, including: in a case where a symbol corresponding to the SBFD time-frequency resource is a DL symbol, determining that the data transmission operation corresponding to the downlink time-frequency resource is: transmitting the downlink data based on the reference signal time-frequency resource.

In an example of the present disclosure, the downlink data in step 101 includes a downlink CSI-RS or a downlink PRS, and the downlink time-frequency resource is a reference signal time-frequency resource corresponding to the CSI-RS or PRS. In step 102, determining, based on the symbol type corresponding to the SBFD time-frequency resource and the overlapping result between the SBFD time-frequency resource and the downlink time-frequency resource, the data transmission operation corresponding to the downlink time-frequency resource, including: in a case where a symbol corresponding to the SBFD time-frequency resource is an UL symbol, if a UE to receive the downlink data is in a half-duplex TDD mode, prohibiting configuring the CSI-RS or the PRS in the SBFD time-frequency resource; or if the UE is in a full-duplex TDD mode, configuring the CSI-RS or the PRS in the SBFD time-frequency resource.

The CSI-RS is mainly used for beam management, phase tracking, CSI reporting, interference measurement, etc., and the PRS is used for positioning measurement and calculation. These two reference signals can also be configured in the SBFD time-frequency resource for transmission.

For an HD UE, it can only transmit or receive at the same time, so it is necessary to clarify how the HD UE handles the CSI-RS/PRS in the SBFD time-frequency resource. If the SBFD time-frequency resource is configured in the DL symbol, the base station and the HD UE will send and receive the CSI-RS/PRS normally. If the SBFD time-frequency resource is configured in the UL symbol, the base station should avoid configuring the CSI-RS/PRS in the SBFD time-frequency resource. The HD UE does not expect the base station to configure the CSI-RS/PRS in the SBFD time-frequency resource. If configured, the HD UE will not receive the CSI-RS/PRS on the resource configured with the CSI-RS/PRS.

For an FD UE, it can transmit and receive at the same time. If the SBFD time-frequency resource is configured in the downlink symbol, the base station and the FD UE will send and receive the CSI-RS/PRS normally. If the SBFD time-frequency resource is configured in the uplink symbol, the base station should avoid configuring the CSI-RS/PRS outside the SBFD time-frequency resource. FD UE does not expect the base station to configure the CSI-RS/PRS outside the SBFD time-frequency resource. If the CSI-RS/PRS is configured outside the SBFD time-frequency resource, the FD UE will not receive the CSI-RS/PRS on the resource configured with the CSI-RS/PRS.

In an example of the present disclosure, the downlink data in step 101 includes a downlink CSI-RS or a downlink PRS, and the downlink time-frequency resource is a reference signal time-frequency resource corresponding to the CSI-RS or PRS. In step 102, determining, based on the symbol type corresponding to the SBFD time-frequency resource and the overlapping result between the SBFD time-frequency resource and the downlink time-frequency resource, the data transmission operation corresponding to the downlink time-frequency resource, including: in a case where a symbol corresponding to the SBFD time-frequency resource is a flexible (F) symbol, when the reference signal time-frequency resource and a time-frequency resource corresponding to a dynamic grant (DG) physical uplink shared channel (PUSCH) overlap (in this specification, "overlap" refers to partially overlap or completely overlap unless otherwise specified) in the SBFD time-frequency resource, if a UE to receive the downlink data is in a full-duplex time-division duplex (TDD) mode, determining that the data transmission operation corresponding to the downlink time-frequency resource is: transmitting the downlink data based on the reference signal time-frequency resource; or when the reference signal time-frequency resource and a time-frequency resource corresponding to repetition of a DG PUSCH overlap in the SBFD time-frequency resource, determining that the data transmission operation corresponding to the downlink time-frequency resource is: transmitting the downlink data based on the reference signal time-frequency resource; or when the reference signal time-frequency resource and a time-frequency resource corresponding to a configured grant (CG) PUSCH overlap in the SBFD time-frequency resource, or the reference signal time-frequency resource overlaps with a time-frequency resource corresponding to repetition of the CG PUSCH, determining that the data transmission operation corresponding to the downlink time-frequency resource is: transmitting the downlink data based on the reference signal time-frequency resource; or when the reference signal time-frequency resource and a time-frequency resource corresponding to a sounding reference signal (SRS) overlap in the SBFD time-frequency resource, determining that the data transmission operation corresponding to the downlink time-frequency resource is: transmitting the downlink data based on the reference signal time-frequency resource.

In an example of the present disclosure, the downlink data in step 101 includes a downlink CSI-RS or a downlink PRS, and the downlink time-frequency resource is a reference signal time-frequency resource corresponding to the CSI-RS or PRS. In step 102, determining, based on the symbol type corresponding to the SBFD time-frequency resource and the overlapping result between the SBFD time-frequency resource and the downlink time-frequency resource, the data transmission operation corresponding to the downlink time-frequency resource, including: in a case where a symbol corresponding to the SBFD time-frequency resource is a F symbol, when the reference signal time-frequency resource and a time-frequency resource corresponding to a dynamic grant (DG) physical uplink shared channel (PUSCH) overlap in the SBFD time-frequency resource, if a UE to receive the downlink data is in a half-duplex TDD mode, determining that the data transmission operation corresponding to the downlink time-frequency resource is: prohibiting transmitting the downlink data; or when the reference signal time-frequency resource and a time-frequency resource corresponding to a physical uplink control channel (PUCCH) overlap in the SBFD time-frequency resource, determining that the data transmission operation corresponding to the downlink time-frequency resource is: prohibiting transmitting the downlink data; or when the reference signal time-frequency resource and a time-frequency resource corresponding to a random access channel occasion (RO) in the target slot overlap in the SBFD time-frequency resource, determining that the data transmission operation corresponding to the downlink time-frequency resource is: prohibiting transmitting the downlink data.

If the SBFD time-frequency resource is configured in a flexible symbol, and a certain CSI-RS/PRS and an uplink signal or an uplink channel overlap in the SBFD time-frequency resource, the transmission mechanism of CSI-RS/PRS on the SBFD time-frequency resource is shown in Table 1. The detailed transmission mechanism is described as follows:

**Table 1 Transmission mechanism when a CSI-RS/PRS and an uplink channel or an uplink signal overlap in a SBFD time-frequency resource in a flexible symbol**

| Transmission Mechanism | PUSCH DG | PUSCH DG Repetition | PUSCH CG | PUSCH CG Repetition | PUCCH | SRS | RO |
|---|---|---|---|---|---|---|---|
| CSI-RS/PRS | not sent | sent | sent | sent | not sent | sent | not sent |

As shown in Table 1, for the HD UE, when the CSI-RS/PRS overlaps with the dynamic grant (DG) PUSCH, the CSI-RS/PRS is not sent; when the CSI-RS/PRS overlaps with the repetition of the DG PUSCH, the CSI-RS/PRS is sent; when the CSI-RS/PRS overlaps with the configured grant (CG) PUSCH or the repetition of the CG PUSCH, the CSI-RS/PRS is sent; when the CSI-RS/PRS overlaps with the PUCCH, the CSI-RS/PRS is not sent; when the CSI-RS/PRS overlaps with the SRS, the CSI-RS/PRS is sent; when the CSI-RS/PRS overlaps with the RO, the CSI-RS/PRS is not sent.

**Table 2 Transmission mechanism when a CSI-RS/PRS and an uplink channel or an uplink signal overlap in a SBFD time-frequency resource in a flexible symbol**

| Transmission Mechanism | PUSCH DG | PUSCH DG Repetition | PUSCH CG | PUSCH CG Repetition | PUCCH | SRS | RO |
|---|---|---|---|---|---|---|---|
| CSI-RS/PRS | sent | sent | sent | sent | not sent | sent | not sent |

As shown in Table 2, for the FD UE, when the CSI-RS/PRS overlaps with the dynamic grant (DG) PUSCH, the CSI-RS/PRS is sent; when the CSI-RS/PRS overlaps with the repetition of the DG PUSCH, the CSI-RS/PRS is sent; when the CSI-RS/PRS overlaps with the configured grant (CG) PUSCH or the repetition of the CG PUSCH, the CSI-RS/PRS is sent; when the CSI-RS/PRS overlaps with the PUCCH, the CSI-RS/PRS is not sent; when the CSI-RS/PRS overlaps with the SRS, the CSI-RS/PRS is sent; when the CSI-RS/PRS overlaps with the RO, the CSI-RS/PRS is not sent.

The above specific examples based on downlink channel transmission provide detailed descriptions of each step of the data transmission method applied to the base station. However, the examples described above are not mutually exclusive, and depending on the actual application, any two or more of these examples can be combined to form new examples. For example, for a target slot where there may be both SSB transmission and PDCCH transmission, examples for SSB and PDCCH can be combined together, which is only an example and not limited to this.

Based on the above technical solution, the scheduling mechanism for the downlink SSB, PDCCH, and reference signal on the SBFD time-frequency resource is determined. The mechanism for transmitting the downlink SSB, PDCCH, and reference signals in SBFD time-frequency resource is different for UEs with different capabilities. Through the technical solution of the present disclosure, it is possible to clarify the transmission mechanism of the base station and UEs for the downlink SSB, PDCCH, and reference signal in SBFD time-frequency resource in case of conflicts with other resources, so that the behavior ambiguity of the base station and the UEs can be avoided in this case, and it can be ensured that the base station and UEs can transmit the SSB, PDCCH and downlink reference signal normally in the full-duplex mode.

Corresponding to the above data transmission method applied to the base station, in an example of the present disclosure, a data transmission method is provided, which is applied to a UE. The method can include: identifying configuration information for sub-band full-duplex (SBFD) time-frequency resources from resource transmission information sent by a base station; in a case where an identification result is that the configuration information is successfully identified, determining, based on the configuration information, a SBFD time-frequency resource in a target slot and a downlink time-frequency resource for receiving downlink data in the target slot; where the target slot comprises an uplink (UL) slot, a downlink (DL) slot, or a special (S) slot, and the SBFD time-frequency resource occupies at least one symbol of the target slot in a time domain, and at least one physical resource block for each symbol in a frequency domain; determining, based on an overlapping result between the SBFD time-frequency resource and the downlink time-frequency resource, a data transmission operation corresponding to the downlink time-frequency resource; and performing the determined data transmission operation in the target slot.

In an example, the resource transmission information includes system signaling or downlink control information (DCI).

In an example, the method further includes: if the UE does not support SBFD, the identification result is that the configuration information fails to be identified.

Based on the same concept as the above data transmission method, an example of the present disclosure provides a data transmission apparatus applied to a base station. As shown in FIG. 7, the apparatus can include:
a first determining module 701, configured to determine a sub-band full-duplex (SBFD) time-frequency resource in a target slot, and a downlink time-frequency resource for transmitting downlink data in the target slot; wherein the target slot comprises an uplink (UL) slot, a downlink (DL) slot, or a special (S) slot, and the SBFD time-frequency resource occupies at least one symbol of the target slot in a time domain, and at least one physical resource block for each symbol in a frequency domain;
a second determining module 702, configured to determine, based on a symbol type corresponding to the SBFD time-frequency resource and an overlapping result between the SBFD time-frequency resource and the downlink time-frequency resource, a data transmission operation corresponding to the downlink time-frequency resource; and
a performing module 703, configured to perform the data transmission operation in the target slot.

In an example, the downlink data includes data carried by a synchronization signal block (SSB), and the downlink time-frequency resource is a SSB time-frequency resource corresponding to the SSB; when determining, based on the symbol type corresponding to the SBFD time-frequency resource and the overlapping result between the SBFD time-frequency resource and the downlink time-frequency resource, the data transmission operation corresponding to the downlink time-frequency resource, the second determining module is specifically configured to: in a case where a symbol corresponding to the SBFD time-frequency resource is a DL symbol or a flexible (F) symbol, if the overlapping result is that the downlink time-frequency resource is located in the SBFD time-frequency resource or partially overlaps with the SBFD time-frequency resource, determine that the data transmission operation corresponding to the downlink time-frequency resource is: transmitting the downlink data based on the SSB time-frequency resource.

In an example, the downlink data includes data carried by a synchronization signal block (SSB), and the downlink time-frequency resource is a SSB time-frequency resource corresponding to the SSB; when determining, based on the symbol type corresponding to the SBFD time-frequency resource and the overlapping result between the SBFD time-frequency resource and the downlink time-frequency resource, the data transmission operation corresponding to the downlink time-frequency resource, the second determining module is specifically configured to: in a case where a symbol corresponding to the SBFD time-frequency resource is an UL symbol, if the overlapping result is that the SSB time-frequency resource is located in the SBFD time-frequency resource, determine that the data transmission operation corresponding to the downlink time-frequency resource is: transmitting the downlink data based on the SSB time-frequency resource.

In an example, the downlink data includes data carried by a synchronization signal block (SSB), and the downlink time-frequency resource is a SSB time-frequency resource corresponding to the SSB; when determining, based on the symbol type corresponding to the SBFD time-frequency resource and the overlapping result between the SBFD time-frequency resource and the downlink time-frequency resource, the data transmission operation corresponding to the downlink time-frequency resource, the second determining module is specifically configured to: in a case where a symbol corresponding to the SBFD time-frequency resource is an UL symbol, if the overlapping result is that the SSB time-frequency resource partially overlaps with the SBFD time-frequency resource, determine that the data transmission operation corresponding to the downlink time-frequency resource is: prohibiting transmitting the downlink data.

In an example, the downlink data includes data carried by a physical downlink control channel (PDCCH), and the downlink time-frequency resource is a control resource set (CORESET) corresponding to the PDCCH; when determining, based on the symbol type corresponding to the SBFD time-frequency resource and the overlapping result between the SBFD time-frequency resource and the downlink time-frequency resource, the data transmission operation corresponding to the downlink time-frequency resource, the second determining module is specifically configured to: in a case where a symbol corresponding to the SBFD time-frequency resource is a DL symbol, if the overlapping result is that the CORESET partially overlaps with the SBFD time-frequency resource or is located in the SBFD time-frequency resource, determine that the data transmission operation corresponding to the downlink time-frequency resource is: transmitting the downlink data based on the CORESET.

In an example, the downlink data includes data carried by a physical downlink control channel (PDCCH), and the downlink time-frequency resource is a control resource set (CORESET) corresponding to the PDCCH; when determining, based on the symbol type corresponding to the SBFD time-frequency resource and the overlapping result between the SBFD time-frequency resource and the downlink time-frequency resource, the data transmission operation corresponding to the downlink time-frequency resource, the second determining module is specifically configured to: in a case where a symbol corresponding to the SBFD time-frequency resource is a flexible (F) symbol, if the overlapping result is that the CORESET partially overlaps with the SBFD time-frequency resource or is located in the SBFD time-frequency resource, and the CORESET is a common CORESET, determine that the data transmission operation corresponding to the downlink time-frequency resource is: transmitting the downlink data based on the CORESET.

In an example, the downlink data includes data carried by a physical downlink control channel (PDCCH), and the downlink time-frequency resource is a control resource set (CORESET) corresponding to the PDCCH; when determining, based on the symbol type corresponding to the SBFD time-frequency resource and the overlapping result between the SBFD time-frequency resource and the downlink time-frequency resource, the data transmission operation corresponding to the downlink time-frequency resource, the second determining module is specifically configured to: in a case where a symbol corresponding to the SBFD time-frequency resource is a flexible (F) symbol, if the overlapping result is that the CORESET partially overlaps with the SBFD time-frequency resource or is located in the SBFD time-frequency resource, and the CORESET is a user equipment (UE)-specific CORESET, when the CORESET overlaps with a random access channel occasion (RO) in the target slot in the time domain, if a UE to receive the downlink data is in a full-duplex time-division duplex (TDD) mode, determine that the data transmission operation corresponding to the downlink time-frequency resource is: transmitting the downlink data based on the CORESET; or, when the CORESET and the RO do not overlap in the time domain, determine that the data transmission operation corresponding to the downlink time-frequency resource is: transmitting the downlink data based on the CORESET.

In an example, the downlink data includes data carried by a physical downlink control channel (PDCCH), and the downlink time-frequency resource is a control resource set (CORESET) corresponding to the PDCCH; when determining, based on the symbol type corresponding to the SBFD time-frequency resource and the overlapping result between the SBFD time-frequency resource and the downlink time-frequency resource, the data transmission operation corresponding to the downlink time-frequency resource, the second determining module is specifically configured to: in a case where a symbol corresponding to the SBFD time-frequency resource is a flexible (F) symbol, if the overlapping result is that the CORESET partially overlaps with the SBFD time-frequency resource or is located in the SBFD time-frequency resource, and the CORESET is a user equipment (UE)-specific CORESET, when the CORESET overlaps with a random access channel occasion (RO) in the target slot in the time domain, if a UE to receive the downlink data is in a half-duplex time-division duplex (TDD) mode, determine that the data transmission operation corresponding to the downlink time-frequency resource is: prohibiting using the CORESET to transmit the downlink data.

In an example, the downlink data includes data carried by a physical downlink control channel (PDCCH), and the downlink time-frequency resource is a control resource set (CORESET) corresponding to the PDCCH; when determining, based on the symbol type corresponding to the SBFD time-frequency resource and the overlapping result between the SBFD time-frequency resource and the downlink time-frequency resource, the data transmission operation corresponding to the downlink time-frequency resource, the second determining module is specifically configured to: in a case where a symbol corresponding to the SBFD time-frequency resource is an UL symbol, if the overlapping result is that the CORESET is located in the SBFD time-frequency resource, when the CORESET overlaps with a random access channel occasion (RO) in the target slot in the time domain, if a user equipment (UE) to receive the downlink data is in a full-duplex time-division duplex (TDD) mode, determine that the data transmission operation corresponding to the downlink time-frequency resource is: transmitting the downlink data based on the CORESET.

In an example, the downlink data includes data carried by a physical downlink control channel (PDCCH), and the downlink time-frequency resource is a control resource set (CORESET) corresponding to the PDCCH; when determining, based on the symbol type corresponding to the SBFD time-frequency resource and the overlapping result between the SBFD time-frequency resource and the downlink time-frequency resource, the data transmission operation corresponding to the downlink time-frequency resource, the second determining module is specifically configured to: in a case where a symbol corresponding to the SBFD time-frequency resource is an UL symbol, if the overlapping result is that the CORESET is located in the SBFD time-frequency resource, when the CORESET overlaps with a random access channel occasion (RO) in the target slot in the time domain, if a user equipment (UE) to receive the downlink data is in a half-duplex time-division duplex (TDD) mode, determine that the data transmission operation corresponding to the downlink time-frequency resource is: prohibiting using the CORESET to transmit the downlink data.

In an example, the downlink data includes data carried by a physical downlink control channel (PDCCH), and the downlink time-frequency resource is a control resource set (CORESET) corresponding to the PDCCH; when determining, based on the symbol type corresponding to the SBFD time-frequency resource and the overlapping result between the SBFD time-frequency resource and the downlink time-frequency resource, the data transmission operation corresponding to the downlink time-frequency resource, the second determining module is specifically configured to: in a case where a symbol corresponding to the SBFD time-frequency resource is an UL symbol, if the overlapping result is that the CORESET is located in the SBFD time-frequency resource, when the CORESET and a random access channel occasion (RO) in the target slot do not overlap in the time domain, if the CORESET is a common CORESET, determine that the data transmission operation corresponding to the downlink time-frequency resource is: transmitting the downlink data based on the CORESET; or when the CORESET and the RO do not overlap in the time domain, if the CORESET is a user equipment (UE)-specific CORESET, and a UE to receive the downlink data is in a full-duplex time-division duplex (TDD) mode, determine that the data transmission operation corresponding to the downlink time-frequency resource is: transmitting the downlink data based on the CORESET.

In an example, the downlink data includes data carried by a physical downlink control channel (PDCCH), and the downlink time-frequency resource is a control resource set (CORESET) corresponding to the PDCCH; when determining, based on the symbol type corresponding to the SBFD time-frequency resource and the overlapping result between the SBFD time-frequency resource and the downlink time-frequency resource, the data transmission operation corresponding to the downlink time-frequency resource, the second determining module is specifically configured to: in a case where a symbol corresponding to the SBFD time-frequency resource is an UL symbol, if the overlapping result is that the CORESET is located in the SBFD time-frequency resource, when the CORESET and a random access channel occasion (RO) in the target slot do not overlap in the time domain, if the CORESET is a user equipment (UE)-specific CORESET, and a UE to receive the downlink data is in a half-duplex time-division duplex (TDD) mode, determine that the data transmission operation corresponding to the downlink time-frequency resource is: prohibiting using the CORESET to the transmit downlink data.

In an example, the downlink data includes data carried by a physical downlink control channel (PDCCH), and the downlink time-frequency resource is a control resource set (CORESET) corresponding to the PDCCH; when determining, based on the symbol type corresponding to the SBFD time-frequency resource and the overlapping result between the SBFD time-frequency resource and the downlink time-frequency resource, the data transmission operation corresponding to the downlink time-frequency resource, the second determining module is specifically configured to: in a case where a symbol corresponding to the SBFD time-frequency resource is an UL symbol, if the overlapping result is that the CORESET partially overlaps with the SBFD time-frequency resource, determine that the data transmission operation corresponding to the downlink time-frequency resource is: prohibiting transmitting the downlink data.

In an example, the downlink data includes data carried by a physical downlink control channel (PDCCH), and the downlink time-frequency resource is a control resource set (CORESET) corresponding to the PDCCH; when determining, based on the symbol type corresponding to the SBFD time-frequency resource and the overlapping result between the SBFD time-frequency resource and the downlink time-frequency resource, the data transmission operation corresponding to the downlink time-frequency resource, the second determining module is specifically configured to: in a case where a symbol corresponding to the SBFD time-frequency resource is an UL symbol, if the overlapping result is that the CORESET partially overlaps with the SBFD time-frequency resource, if a user equipment (UE) to receive the downlink data is in a full-duplex time-division duplex (TDD) mode, determine that the data transmission operation corresponding to the downlink time-frequency resource is: transmitting the downlink data based on a first target resource; wherein the first target resource is an overlapping time-frequency resource between the CORESET and the SBFD time-frequency resource, wherein a size of the first target resource is greater than or equal to a size of the downlink data carried by the PDCCH.

In an example, the downlink data includes data carried by a physical downlink control channel (PDCCH), and the downlink time-frequency resource is a control resource set (CORESET) corresponding to the PDCCH; when determining, based on the symbol type corresponding to the SBFD time-frequency resource and the overlapping result between the SBFD time-frequency resource and the downlink time-frequency resource, the data transmission operation corresponding to the downlink time-frequency resource, the second determining module is specifically configured to: in a case where a symbol corresponding to the SBFD time-frequency resource is an UL symbol, if the overlapping result is that the CORESET partially overlaps with the SBFD time-frequency resource, and a user equipment (UE) to receive the downlink data is in a full-duplex time-division duplex (TDD) mode, if a first target resource overlaps with a random access channel occasion (RO) in the target slot, when a size of a second target resource is greater than or equal to a size of downlink data carried by the PDCCH, determine that the data transmission operation corresponding to the downlink time-frequency resource is: transmitting the downlink data based on the second target resource; wherein the first target resource is an overlapping time-frequency resource between the CORESET and the SBFD time-frequency resource, and the second target resource is a time-frequency resource in the first target resource that does not overlap with the RO.

In an example, the downlink data includes a downlink channel state indication reference signal (CSI-RS) or a downlink positioning reference signal (PRS), and the downlink time-frequency resource is a reference signal time-frequency resource corresponding to the CSI-RS or the PRS; when determining, based on the symbol type corresponding to the SBFD time-frequency resource and the overlapping result between the SBFD time-frequency resource and the downlink time-frequency resource, the data transmission operation corresponding to the downlink time-frequency resource, the second determining module is specifically configured to: in a case where a symbol corresponding to the SBFD time-frequency resource is a DL symbol, determine that the data transmission operation corresponding to the downlink time-frequency resource is: transmitting the downlink data based on the reference signal time-frequency resource.

In an example, the downlink data includes a downlink channel state indication reference signal (CSI-RS) or a downlink positioning reference signal (PRS), and the downlink time-frequency resource is a reference signal time-frequency resource corresponding to the CSI-RS or the PRS; the apparatus further comprises a configuring module, configured to: in a case where a symbol corresponding to the SBFD time-frequency resource is an UL symbol, if a user equipment (UE) to receive the downlink data is in a half-duplex time-division duplex (TDD) mode, prohibit configuring the CSI-RS or the PRS in the SBFD time-frequency resource; or if the UE is in a full-duplex TDD mode, configure the CSI-RS or the PRS in the SBFD time-frequency resource.

In an example, the downlink data includes a downlink channel state indication reference signal (CSI-RS) or a downlink positioning reference signal (PRS), and the downlink time-frequency resource is a reference signal time-frequency resource corresponding to the CSI-RS or the PRS; when determining, based on the symbol type corresponding to the SBFD time-frequency resource and the overlapping result between the SBFD time-frequency resource and the downlink time-frequency resource, the data transmission operation corresponding to the downlink time-frequency resource, the second determining module is specifically configured to: in a case where a symbol corresponding to the SBFD time-frequency resource is a flexible (F) symbol, when the reference signal time-frequency resource and a time-frequency resource corresponding to a dynamic grant (DG) physical uplink shared channel (PUSCH) overlap in the SBFD time-frequency resource, if a user equipment (UE) to receive the downlink data is in a full-duplex time-division duplex (TDD) mode, determine that the data transmission operation corresponding to the downlink time-frequency resource is: transmitting the downlink data based on the reference signal time-frequency resource; or when the reference signal time-frequency resource and a time-frequency resource corresponding to repetition of a DG PUSCH overlap in the SBFD time-frequency resource, determine that the data transmission operation corresponding to the downlink time-frequency resource is: transmitting the downlink data based on the reference signal time-frequency resource; or when the reference signal time-frequency resource and a time-frequency resource corresponding to a configured grant (CG) PUSCH overlap in the SBFD time-frequency resource, or the reference signal time-frequency resource overlaps with a time-frequency resource corresponding to repetition of the CG PUSCH, determine that the data transmission operation corresponding to the downlink time-frequency resource is: transmitting the downlink data based on the reference signal time-frequency resource; or when the reference signal time-frequency resource and a time-frequency resource corresponding to a sounding reference signal (SRS) overlap in the SBFD time-frequency resource, determine that the data transmission operation corresponding to the downlink time-frequency resource is: transmitting the downlink data based on the reference signal time-frequency resource.

In an example, the downlink data includes a downlink channel state indication reference signal (CSI-RS) or a downlink positioning reference signal (PRS), and the downlink time-frequency resource is a reference signal time-frequency resource corresponding to the CSI-RS or the PRS; when determining, based on the symbol type corresponding to the SBFD time-frequency resource and the overlapping result between the SBFD time-frequency resource and the downlink time-frequency resource, the data transmission operation corresponding to the downlink time-frequency resource, the second determining module is specifically configured to: in a case where a symbol corresponding to the SBFD time-frequency resource is a flexible (F) symbol, when the reference signal time-frequency resource and a time-frequency resource corresponding to a dynamic grant (DG) physical uplink shared channel (PUSCH) overlap in the SBFD time-frequency resource, if a user equipment (UE) to receive the downlink data is in a half-duplex time-division duplex (TDD) mode, determine that the data transmission operation corresponding to the downlink time-frequency resource is: prohibiting transmitting the downlink data; or when the reference signal time-frequency resource and a time-frequency resource corresponding to a physical uplink control channel (PUCCH) overlap in the SBFD time-frequency resource, determine that the data transmission operation corresponding to the downlink time-frequency resource is: prohibiting transmitting the downlink data; or when the reference signal time-frequency resource and a time-frequency resource corresponding to a random access channel occasion (RO) in the target slot overlap in the SBFD time-frequency resource, determine that the data transmission operation corresponding to the downlink time-frequency resource is: prohibiting transmitting the downlink data.

An example of the present disclosure provides a data transmission apparatus applied to a UE. The apparatus includes: an identifying module, configured to identify configuration information for sub-band full-duplex (SBFD) time-frequency resources from resource transmission information sent by a base station; a first determining module, configured to, in a case where an identification result is that the configuration information is successfully identified, determine, based on the configuration information, a SBFD time-frequency resource in a target slot and a downlink time-frequency resource for receiving downlink data in the target slot; wherein the target slot comprises an uplink (UL) slot, a downlink (DL) slot, or a special (S) slot, and the SBFD time-frequency resource occupies at least one symbol of the target slot in a time domain, and at least one physical resource block for each symbol in a frequency domain; a second determining module, configured to determine, based on an overlapping result between the SBFD time-frequency resource and the downlink time-frequency resource, a data transmission operation corresponding to the downlink time-frequency resource; and a performing module, configured to perform the data transmission operation in the target slot.

In an example, the resource transmission information comprises system signaling or downlink control information (DCI).

In an example, if the UE does not support SBFD, the identification result is that the configuration information fails to be identified.

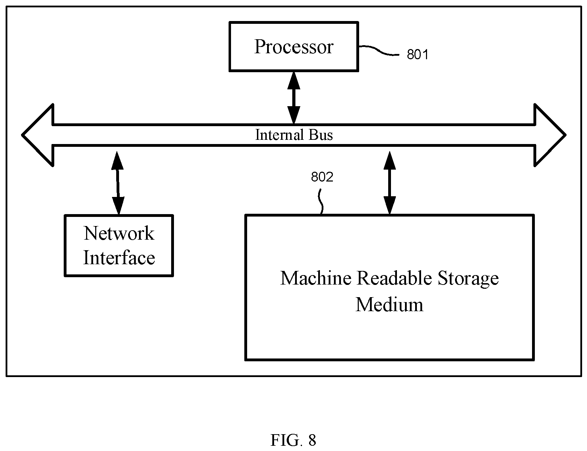

Based on the same concept as the above data transmission methods, an example of the present disclosure provides an electronic device (such as a base station or user equipment in the above examples). As shown in FIG. 8, the electronic device includes a processor 801 and a machine readable storage medium 802, and the machine readable storage medium 802 stores machine executable instructions that can be executed by the processor. The processor 801 is configured to execute the machine executable instructions to implement the data transmission methods disclosed in the above examples of the present disclosure.

Based on the same concept as the above data transmission methods, an example of the present disclosure also provides a machine readable storage medium, on which several computer instructions are stored. When the computer instructions are executed by the processor, the data transmission methods disclosed in the above examples of the present disclosure can be implemented.

The above machine readable storage medium can be any electronic, magnetic, optical or other physical storage apparatuses, which can contain or store information, such as executable instructions, data. For example, the machine readable storage medium can be a random access memory (RAM), a volatile memory, a non-volatile memory, a flash memory, a storage drive (such as a hard disk drive), a solid state drive, any type of storage disk (such as an optical disk, a DVD), or similar storage media, or a combination of them.

The devices, apparatuses, or modules described in the above embodiments can be implemented by computer chips or entities, or by products with certain functions. A typical implementation device is a computer, and the specific form of the computer can be a personal computer, a laptop computer, a cellular phone, a camera phone, a smart phone, a personal digital assistant, a media player, a navigation device, an email transceiver, a game console, a tablet computer, a wearable device or a combination of any of these devices.

For the convenience of description, the above apparatuses are described by dividing their functions into various units. In implementing the present disclosure, the functions of each unit can be implemented in one or more pieces of software and/or hardware.

Those skilled in the art should understand that the embodiments of the present disclosure can be provided as methods or computer program products. Therefore, the present disclosure can adopt the form of a complete hardware embodiment, a complete software embodiment, or an embodiment combining software and hardware. Moreover, the embodiments of the present disclosure can take the form of computer program products implemented on one or more computer-usable storage media (including but not limited to disk storage, CD-ROM, optical storage, or the like) containing computer-usable program codes.

The present disclosure refers to the flowchart and/or block diagram of the method, the device (system), and the computer program product according to the embodiments of the present disclosure. It should be understood that each process and/or block in the flowchart and/or block diagram, and the combination of processes and/or blocks in the flowchart and/or block diagram can be realized by computer program instructions. These computer program instructions can be provided to a processor of a general-purpose computer, a special-purpose computer, an embedded processor, or other programmable data processing device to generate a machine, such that the instructions executed by the processor of the computer or other programmable data processing device produce means for implementing the functions designated in one or more processes in the flowchart and/or one or more blocks in the block diagram.

Moreover, these computer program instructions can also be stored in a computer-readable memory which can guide a computer or other programmable data processing device to operate in a specific manner, such that the instructions stored in the computer-readable memory produce an article of manufacture including an instruction apparatus, which implements the functions designated in one or more processes in the flowchart and/or one or more blocks in the block diagram.

These computer program instructions can also be loaded on a computer or other programmable data processing device, such that a series of operation steps are executed on a computer or other programmable device to produce computer-implemented processing, such that the instructions executed on the computer or other programmable device provide steps to implement the functions designated in one or more processes in the flowchart and/or one or more blocks in the block diagram.

The above descriptions are only the examples of the present disclosure and are not intended to limit the present disclosure. For those skilled in the art, there may be various changes and variations in the present application. Any modification, equivalent replacement, improvement, and the like made within the spirit and principle of the present disclosure shall be included within the protection scope of the present disclosure.

## Claims

1. A data transmission method, performed by a base station, the method comprising:
determining a sub-band full-duplex (SBFD) time-frequency resource in a target slot, and a downlink time-frequency resource for transmitting downlink data in the target slot; wherein the target slot comprises an uplink (UL) slot, a downlink (DL) slot, or a special (S) slot, and the SBFD time-frequency resource occupies at least one symbol of the target slot in a time domain, and at least one physical resource block for each symbol in a frequency domain;
determining, based on a symbol type corresponding to the SBFD time-frequency resource and an overlapping result between the SBFD time-frequency resource and the downlink time-frequency resource, a data transmission operation corresponding to the downlink time-frequency resource; and
performing the data transmission operation in the target slot.

2. The method according to claim 1, wherein the downlink time-frequency resource comprises a synchronization signal block (SSB) time-frequency resource corresponding to a SSB;
determining, based on the symbol type corresponding to the SBFD time-frequency resource and the overlapping result between the SBFD time-frequency resource and the downlink time-frequency resource, the data transmission operation corresponding to the downlink time-frequency resource, comprises:
in a case where a symbol corresponding to the SBFD time-frequency resource is a DL symbol or a flexible (F) symbol, if the overlapping result is that the downlink time-frequency resource is located in the SBFD time-frequency resource or partially overlaps with the SBFD time-frequency resource,
determining that the data transmission operation corresponding to the downlink time-frequency resource comprises: transmitting, based on the SSB time-frequency resource, downlink data carried by the SSB.

3. The method according to claim 1, wherein the downlink time-frequency resource comprises a synchronization signal block (SSB) time-frequency resource corresponding to a SSB;
determining, based on the symbol type corresponding to the SBFD time-frequency resource and the overlapping result between the SBFD time-frequency resource and the downlink time-frequency resource, the data transmission operation corresponding to the downlink time-frequency resource, comprises:
in a case where a symbol corresponding to the SBFD time-frequency resource is an UL symbol, if the overlapping result is that the SSB time-frequency resource is located in the SBFD time-frequency resource,
determining that the data transmission operation corresponding to the downlink time-frequency resource comprises: transmitting, based on the SSB time-frequency resource, downlink data carried by the SSB.

4. The method according to claim 1, wherein the downlink time-frequency resource comprises a synchronization signal block (SSB) time-frequency resource corresponding to a SSB;
determining, based on the symbol type corresponding to the SBFD time-frequency resource and the overlapping result between the SBFD time-frequency resource and the downlink time-frequency resource, the data transmission operation corresponding to the downlink time-frequency resource, comprises:
in a case where a symbol corresponding to the SBFD time-frequency resource is an UL symbol, if the overlapping result is that the SSB time-frequency resource partially overlaps with the SBFD time-frequency resource,
determining that the data transmission operation corresponding to the downlink time-frequency resource comprises: prohibiting transmitting downlink data carried by the SSB.

5. The method according to claim 1, wherein the downlink time-frequency resource comprises a control resource set (CORESET) corresponding to a physical downlink control channel (PDCCH);
determining, based on the symbol type corresponding to the SBFD time-frequency resource and the overlapping result between the SBFD time-frequency resource and the downlink time-frequency resource, the data transmission operation corresponding to the downlink time-frequency resource, comprises:
in a case where a symbol corresponding to the SBFD time-frequency resource is a DL symbol, if the overlapping result is that the CORESET partially overlaps with the SBFD time-frequency resource or is located in the SBFD time-frequency resource,
determining that the data transmission operation corresponding to the downlink time-frequency resource comprises: transmitting, based on the CORESET, downlink data carried by the PDCCH.

6. The method according to claim 1, wherein the downlink time-frequency resource comprises a control resource set (CORESET) corresponding to a physical downlink control channel (PDCCH);
determining, based on the symbol type corresponding to the SBFD time-frequency resource and the overlapping result between the SBFD time-frequency resource and the downlink time-frequency resource, the data transmission operation corresponding to the downlink time-frequency resource, comprises:
in a case where a symbol corresponding to the SBFD time-frequency resource is a flexible (F) symbol, if the overlapping result is that the CORESET partially overlaps with the SBFD time-frequency resource or is located in the SBFD time-frequency resource, and the CORESET is a common CORESET,
determining that the data transmission operation corresponding to the downlink time-frequency resource comprises: transmitting, based on the CORESET, downlink data carried by the PDCCH.

7. The method according to claim 1, wherein the downlink time-frequency resource comprises a control resource set (CORESET) corresponding to a physical downlink control channel (PDCCH);
determining, based on the symbol type corresponding to the SBFD time-frequency resource and the overlapping result between the SBFD time-frequency resource and the downlink time-frequency resource, the data transmission operation corresponding to the downlink time-frequency resource, comprises:
in a case where a symbol corresponding to the SBFD time-frequency resource is a flexible (F) symbol, if the overlapping result is that the CORESET partially overlaps with the SBFD time-frequency resource or is located in the SBFD time-frequency resource, and the CORESET is a user equipment (UE)-specific CORESET,
when the CORESET overlaps with a random access channel occasion (RO) in the target slot in the time domain, if a UE to receive the downlink data is in a full-duplex time-division duplex (TDD) mode, determining that the data transmission operation corresponding to the downlink time-frequency resource comprises: transmitting, based on the CORESET, downlink data carried by the PDCCH; or,
when the CORESET and the RO do not overlap in the time domain, determining that the data transmission operation corresponding to the downlink time-frequency resource comprises: transmitting, based on the CORESET, downlink data carried by the PDCCH.

8. The method according to claim 1, wherein the downlink time-frequency resource comprises a control resource set (CORESET) corresponding to a physical downlink control channel (PDCCH);
determining, based on the symbol type corresponding to the SBFD time-frequency resource and the overlapping result between the SBFD time-frequency resource and the downlink time-frequency resource, the data transmission operation corresponding to the downlink time-frequency resource, comprises:
in a case where a symbol corresponding to the SBFD time-frequency resource is a flexible (F) symbol, if the overlapping result is that the CORESET partially overlaps with the SBFD time-frequency resource or is located in the SBFD time-frequency resource, and the CORESET is a user equipment (UE)-specific CORESET,
when the CORESET overlaps with a random access channel occasion (RO) in the target slot in the time domain, if a UE to receive the downlink data is in a half-duplex time-division duplex (TDD) mode, determining that the data transmission operation corresponding to the downlink time-frequency resource comprises: prohibiting using the CORESET to transmit downlink data carried by the PDCCH.

9. The method according to claim 1, wherein the downlink time-frequency resource comprises a control resource set (CORESET) corresponding to a physical downlink control channel (PDCCH);
determining, based on the symbol type corresponding to the SBFD time-frequency resource and the overlapping result between the SBFD time-frequency resource and the downlink time-frequency resource, the data transmission operation corresponding to the downlink time-frequency resource, comprises:
in a case where a symbol corresponding to the SBFD time-frequency resource is an UL symbol, if the overlapping result is that the CORESET is located in the SBFD time-frequency resource,
when the CORESET overlaps with a random access channel occasion (RO) in the target slot in the time domain, if a user equipment (UE) to receive the downlink data is in a full-duplex time-division duplex (TDD) mode, determining that the data transmission operation corresponding to the downlink time-frequency resource comprises: transmitting, based on the CORESET, downlink data carried by the PDCCH.

10. The method according to claim 1, wherein the downlink time-frequency resource comprises a control resource set (CORESET) corresponding to a physical downlink control channel (PDCCH);
determining, based on the symbol type corresponding to the SBFD time-frequency resource and the overlapping result between the SBFD time-frequency resource and the downlink time-frequency resource, the data transmission operation corresponding to the downlink time-frequency resource, comprises:
in a case where a symbol corresponding to the SBFD time-frequency resource is an UL symbol, if the overlapping result is that the CORESET is located in the SBFD time-frequency resource,
when the CORESET overlaps with a random access channel occasion (RO) in the target slot in the time domain, if a user equipment (UE) to receive the downlink data is in a half-duplex time-division duplex (TDD) mode, determining that the data transmission operation corresponding to the downlink time-frequency resource comprises: prohibiting using the CORESET to transmit downlink data carried by the PDCCH.

11. The method according to claim 1, wherein the downlink time-frequency resource comprises a control resource set (CORESET) corresponding to a physical downlink control channel (PDCCH);
determining, based on the symbol type corresponding to the SBFD time-frequency resource and the overlapping result between the SBFD time-frequency resource and the downlink time-frequency resource, the data transmission operation corresponding to the downlink time-frequency resource, comprises:
in a case where a symbol corresponding to the SBFD time-frequency resource is an UL symbol, if the overlapping result is that the CORESET is located in the SBFD time-frequency resource,
when the CORESET and a random access channel occasion (RO) in the target slot do not overlap in the time domain, if the CORESET is a common CORESET, determining that the data transmission operation corresponding to the downlink time-frequency resource comprises: transmitting, based on the CORESET, downlink data carried by the PDCCH; or
when the CORESET and the RO do not overlap in the time domain, if the CORESET is a user equipment (UE)-specific CORESET, and a UE to receive the downlink data is in a full-duplex time-division duplex (TDD) mode, determining that the data transmission operation corresponding to the downlink time-frequency resource comprises: transmitting, based on the CORESET, downlink data carried by the PDCCH.

12. The method according to claim 1, wherein the downlink time-frequency resource comprises a control resource set (CORESET) corresponding to a physical downlink control channel (PDCCH);
determining, based on the symbol type corresponding to the SBFD time-frequency resource and the overlapping result between the SBFD time-frequency resource and the downlink time-frequency resource, the data transmission operation corresponding to the downlink time-frequency resource, comprises:
in a case where a symbol corresponding to the SBFD time-frequency resource is an UL symbol, if the overlapping result is that the CORESET is located in the SBFD time-frequency resource,
when the CORESET and a random access channel occasion (RO) in the target slot do not overlap in the time domain, if the CORESET is a user equipment (UE)-specific CORESET, and a UE to receive the downlink data is in a half-duplex time-division duplex (TDD) mode, determining that the data transmission operation corresponding to the downlink time-frequency resource comprises: prohibiting using the CORESET to transmit downlink data carried by the PDCCH.

13. The method according to claim 1, wherein the downlink time-frequency resource comprises a control resource set (CORESET) corresponding to a physical downlink control channel (PDCCH);
determining, based on the symbol type corresponding to the SBFD time-frequency resource and the overlapping result between the SBFD time-frequency resource and the downlink time-frequency resource, the data transmission operation corresponding to the downlink time-frequency resource, comprises:
in a case where a symbol corresponding to the SBFD time-frequency resource is an UL symbol, if the overlapping result is that the CORESET partially overlaps with the SBFD time-frequency resource,
determining that the data transmission operation corresponding to the downlink time-frequency resource comprises: prohibiting transmitting downlink data carried by the PDCCH.

14. The method according to claim 1, wherein the downlink time-frequency resource comprises a control resource set (CORESET) corresponding to a physical downlink control channel (PDCCH);
determining, based on the symbol type corresponding to the SBFD time-frequency resource and the overlapping result between the SBFD time-frequency resource and the downlink time-frequency resource, the data transmission operation corresponding to the downlink time-frequency resource, comprises:
in a case where a symbol corresponding to the SBFD time-frequency resource is an UL symbol, if the overlapping result is that the CORESET partially overlaps with the SBFD time-frequency resource,
if a user equipment (UE) to receive the downlink data is in a full-duplex time-division duplex (TDD) mode, determining that the data transmission operation corresponding to the downlink time-frequency resource comprises: transmitting, based on a first target resource, downlink data carried by the PDCCH; wherein the first target resource is an overlapping time-frequency resource between the CORESET and the SBFD time-frequency resource, wherein a size of the first target resource is greater than or equal to a size of the downlink data carried by the PDCCH.

15. The method according to claim 1, wherein the downlink time-frequency resource comprises a control resource set (CORESET) corresponding to a physical downlink control channel (PDCCH);
determining, based on the symbol type corresponding to the SBFD time-frequency resource and the overlapping result between the SBFD time-frequency resource and the downlink time-frequency resource, the data transmission operation corresponding to the downlink time-frequency resource, comprises:
in a case where a symbol corresponding to the SBFD time-frequency resource is an UL symbol, if the overlapping result is that the CORESET partially overlaps with the SBFD time-frequency resource, and a user equipment (UE) to receive the downlink data is in a full-duplex time-division duplex (TDD) mode,
if a first target resource overlaps with a random access channel occasion (RO) in the target slot, when a size of a second target resource is greater than or equal to a size of downlink data carried by the PDCCH, determining that the data transmission operation corresponding to the downlink time-frequency resource comprises: transmitting, based on the second target resource, the downlink data carried by the PDCCH; wherein the first target resource is an overlapping time-frequency resource between the CORESET and the SBFD time-frequency resource, and the second target resource is a time-frequency resource in the first target resource that does not overlap with the RO.

16. The method according to claim 1, wherein the downlink time-frequency resource comprises a reference signal time-frequency resource corresponding to a downlink channel state indication reference signal (CSI-RS) or a downlink positioning reference signal (PRS);
determining, based on the symbol type corresponding to the SBFD time-frequency resource and the overlapping result between the SBFD time-frequency resource and the downlink time-frequency resource, the data transmission operation corresponding to the downlink time-frequency resource, comprises:
in a case where a symbol corresponding to the SBFD time-frequency resource is a DL symbol, determining that the data transmission operation corresponding to the downlink time-frequency resource comprises: transmitting, based on the reference signal time-frequency resource, downlink data carried by the CSI-RS or the PRS.

17. The method according to claim 1, wherein the downlink data comprises a downlink channel state indication reference signal (CSI-RS) or a downlink positioning reference signal (PRS), and the downlink time-frequency resource comprises a reference signal time-frequency resource corresponding to the CSI-RS or the PRS;
the method further comprises: in a case where a symbol corresponding to the SBFD time-frequency resource is an UL symbol,
if a user equipment (UE) to receive the downlink data is in a half-duplex time-division duplex (TDD) mode, prohibiting configuring the CSI-RS or the PRS in the SBFD time-frequency resource; or
if the UE is in a full-duplex TDD mode, configuring the CSI-RS or the PRS in the SBFD time-frequency resource.

18. The method according to claim 1, wherein the downlink time-frequency resource comprises a reference signal time-frequency resource corresponding to a downlink channel state indication reference signal (CSI-RS) or a downlink positioning reference signal (PRS);
determining, based on the symbol type corresponding to the SBFD time-frequency resource and the overlapping result between the SBFD time-frequency resource and the downlink time-frequency resource, the data transmission operation corresponding to the downlink time-frequency resource, comprises:
in a case where a symbol corresponding to the SBFD time-frequency resource is a flexible (F) symbol,
when the reference signal time-frequency resource and a time-frequency resource corresponding to a dynamic grant (DG) physical uplink shared channel (PUSCH) overlap in the SBFD time-frequency resource, if a user equipment (UE) to receive the downlink data is in a full-duplex time-division duplex (TDD) mode, determining that the data transmission operation corresponding to the downlink time-frequency resource comprises: transmitting, based on the reference signal time-frequency resource, downlink data carried by the CSI-RS or the PRS; or
when the reference signal time-frequency resource and a time-frequency resource corresponding to repetition of a DG PUSCH overlap in the SBFD time-frequency resource, determining that the data transmission operation corresponding to the downlink time-frequency resource comprises: transmitting, based on the reference signal time-frequency resource, downlink data carried by the CSI-RS or the PRS; or
when the reference signal time-frequency resource and a time-frequency resource corresponding to a configured grant (CG) PUSCH overlap in the SBFD time-frequency resource, or the reference signal time-frequency resource overlaps with a time-frequency resource corresponding to repetition of the CG PUSCH, determining that the data transmission operation corresponding to the downlink time-frequency resource comprises: transmitting, based on the reference signal time-frequency resource, downlink data carried by the CSI-RS or the PRS; or
when the reference signal time-frequency resource and a time-frequency resource corresponding to a sounding reference signal (SRS) overlap in the SBFD time-frequency resource, determining that the data transmission operation corresponding to the downlink time-frequency resource comprises: transmitting, based on the reference signal time-frequency resource, downlink data carried by the CSI-RS or the PRS.

19. The method according to claim 1, wherein the downlink time-frequency resource comprises a reference signal time-frequency resource corresponding to a downlink channel state indication reference signal (CSI-RS) or a downlink positioning reference signal (PRS);
determining, based on the symbol type corresponding to the SBFD time-frequency resource and the overlapping result between the SBFD time-frequency resource and the downlink time-frequency resource, the data transmission operation corresponding to the downlink time-frequency resource, comprises:
in a case where a symbol corresponding to the SBFD time-frequency resource is a flexible (F) symbol,
when the reference signal time-frequency resource and a time-frequency resource corresponding to a dynamic grant (DG) physical uplink shared channel (PUSCH) overlap in the SBFD time-frequency resource, if a user equipment (UE) to receive the downlink data is in a half-duplex time-division duplex (TDD) mode, determining that the data transmission operation corresponding to the downlink time-frequency resource comprises: prohibiting transmitting downlink data carried by the CSI-RS or the PRS; or
when the reference signal time-frequency resource and a time-frequency resource corresponding to a physical uplink control channel (PUCCH) overlap in the SBFD time-frequency resource, determining that the data transmission operation corresponding to the downlink time-frequency resource comprises: prohibiting transmitting downlink data carried by the CSI-RS or the PRS; or
when the reference signal time-frequency resource and a time-frequency resource corresponding to a random access channel occasion (RO) in the target slot overlap in the SBFD time-frequency resource, determining that the data transmission operation corresponding to the downlink time-frequency resource comprises: prohibiting transmitting downlink data carried by the CSI-RS or the PRS.

20. The method according to any one of claims 1 to 19, further comprising:
carrying configuration information for the SBFD time-frequency resource in system signaling or downlink control information (DCI) and sending the configuration information to a user equipment (UE).

21. The method according to any one of claims 7 to 12 and 15, wherein the RO is configured with N_{gap} gap symbols;
whether the CORESET and the RO overlap in the time domain is determined by:
if the CORESET does not overlap with the RO and the N_{gap} gap symbols in the time domain, it is determined that the CORESET does not overlap with the RO in the time domain; or
if the CORESET overlaps with at least one of the N_{gap} gap symbols or overlaps with the RO in the time domain, it is determined that the CORESET overlaps with the RO in the time domain.

22. A data transmission method, performed by a user equipment (UE), the method comprising:
identifying configuration information for sub-band full-duplex (SBFD) time-frequency resources from resource transmission information sent by a base station;
in a case where an identification result is that the configuration information is successfully identified, determining, based on the configuration information, a SBFD time-frequency resource in a target slot and a downlink time-frequency resource for receiving downlink data in the target slot; wherein the target slot comprises an uplink (UL) slot, a downlink (DL) slot, or a special (S) slot, and the SBFD time-frequency resource occupies at least one symbol of the target slot in a time domain, and at least one physical resource block for each symbol in a frequency domain;
determining, based on an overlapping result between the SBFD time-frequency resource and the downlink time-frequency resource, a data transmission operation corresponding to the downlink time-frequency resource; and
performing the data transmission operation in the target slot.

23. The method according to claim 22, wherein the resource transmission information comprises system signaling or downlink control information (DCI).

24. The method according to claim 22 or 23, wherein if the UE does not support SBFD, the identification result is that the configuration information fails to be identified.

25. A data transmission apparatus, applied to a base station, the apparatus comprises:
a first determining module, configured to determine a sub-band full-duplex (SBFD) time-frequency resource in a target slot, and a downlink time-frequency resource for transmitting downlink data in the target slot; wherein the target slot comprises an uplink (UL) slot, a downlink (DL) slot, or a special (S) slot, and the SBFD time-frequency resource occupies at least one symbol of the target slot in a time domain, and at least one physical resource block for each symbol in a frequency domain;
a second determining module, configured to determine, based on a symbol type corresponding to the SBFD time-frequency resource and an overlapping result between the SBFD time-frequency resource and the downlink time-frequency resource, a data transmission operation corresponding to the downlink time-frequency resource; and
a performing module, configured to perform the data transmission operation in the target slot.

26. The apparatus according to claim 25, wherein the downlink time-frequency resource comprises a synchronization signal block (SSB) time-frequency resource corresponding to a SSB;
when determining, based on the symbol type corresponding to the SBFD time-frequency resource and the overlapping result between the SBFD time-frequency resource and the downlink time-frequency resource, the data transmission operation corresponding to the downlink time-frequency resource, the second determining module is specifically configured to:
in a case where a symbol corresponding to the SBFD time-frequency resource is a DL symbol or a flexible (F) symbol, if the overlapping result is that the downlink time-frequency resource is located in the SBFD time-frequency resource or partially overlaps with the SBFD time-frequency resource,
determine that the data transmission operation corresponding to the downlink time-frequency resource comprises: transmitting, based on the SSB time-frequency resource, downlink data carried by the SSB.

27. The apparatus according to claim 25, wherein the downlink time-frequency resource comprises a synchronization signal block (SSB) time-frequency resource corresponding to a SSB;
when determining, based on the symbol type corresponding to the SBFD time-frequency resource and the overlapping result between the SBFD time-frequency resource and the downlink time-frequency resource, the data transmission operation corresponding to the downlink time-frequency resource, the second determining module is specifically configured to:
in a case where a symbol corresponding to the SBFD time-frequency resource is an UL symbol, if the overlapping result is that the SSB time-frequency resource is located in the SBFD time-frequency resource,
determine that the data transmission operation corresponding to the downlink time-frequency resource comprises: transmitting, based on the SSB time-frequency resource, downlink data carried by the SSB.

28. The apparatus according to claim 25, wherein the downlink time-frequency resource comprises a synchronization signal block (SSB) time-frequency resource corresponding to a SSB;
when determining, based on the symbol type corresponding to the SBFD time-frequency resource and the overlapping result between the SBFD time-frequency resource and the downlink time-frequency resource, the data transmission operation corresponding to the downlink time-frequency resource, the second determining module is specifically configured to:
in a case where a symbol corresponding to the SBFD time-frequency resource is an UL symbol, if the overlapping result is that the SSB time-frequency resource partially overlaps with the SBFD time-frequency resource,
determine that the data transmission operation corresponding to the downlink time-frequency resource comprises: prohibiting transmitting downlink data carried by the SSB.

29. The apparatus according to claim 25, wherein the downlink time-frequency resource comprises a control resource set (CORESET) corresponding to a physical downlink control channel (PDCCH);
when determining, based on the symbol type corresponding to the SBFD time-frequency resource and the overlapping result between the SBFD time-frequency resource and the downlink time-frequency resource, the data transmission operation corresponding to the downlink time-frequency resource, the second determining module is specifically configured to:
in a case where a symbol corresponding to the SBFD time-frequency resource is a DL symbol, if the overlapping result is that the CORESET partially overlaps with the SBFD time-frequency resource or is located in the SBFD time-frequency resource,
determine that the data transmission operation corresponding to the downlink time-frequency resource comprises: transmitting, based on the CORESET, downlink data carried by the PDCCH.

30. The apparatus according to claim 25, wherein the downlink time-frequency resource comprises a control resource set (CORESET) corresponding to a physical downlink control channel (PDCCH);
when determining, based on the symbol type corresponding to the SBFD time-frequency resource and the overlapping result between the SBFD time-frequency resource and the downlink time-frequency resource, the data transmission operation corresponding to the downlink time-frequency resource, the second determining module is specifically configured to:
in a case where a symbol corresponding to the SBFD time-frequency resource is a flexible (F) symbol, if the overlapping result is that the CORESET partially overlaps with the SBFD time-frequency resource or is located in the SBFD time-frequency resource, and the CORESET is a common CORESET,
determine that the data transmission operation corresponding to the downlink time-frequency resource comprises: transmitting, based on the CORESET, downlink data carried by the PDCCH.

31. The apparatus according to claim 25, wherein the downlink time-frequency resource comprises a control resource set (CORESET) corresponding to a physical downlink control channel (PDCCH);
when determining, based on the symbol type corresponding to the SBFD time-frequency resource and the overlapping result between the SBFD time-frequency resource and the downlink time-frequency resource, the data transmission operation corresponding to the downlink time-frequency resource, the second determining module is specifically configured to:
in a case where a symbol corresponding to the SBFD time-frequency resource is a flexible (F) symbol, if the overlapping result is that the CORESET partially overlaps with the SBFD time-frequency resource or is located in the SBFD time-frequency resource, and the CORESET is a user equipment (UE)-specific CORESET,
when the CORESET overlaps with a random access channel occasion (RO) in the target slot in the time domain, if a UE to receive the downlink data is in a full-duplex time-division duplex (TDD) mode, determine that the data transmission operation corresponding to the downlink time-frequency resource comprises: transmitting, based on the CORESET, downlink data carried by the PDCCH; or,
when the CORESET and the RO do not overlap in the time domain, determine that the data transmission operation corresponding to the downlink time-frequency resource comprises: transmitting, based on the CORESET, downlink data carried by the PDCCH.

32. The apparatus according to claim 25, wherein the downlink time-frequency resource comprises a control resource set (CORESET) corresponding to a physical downlink control channel (PDCCH);
when determining, based on the symbol type corresponding to the SBFD time-frequency resource and the overlapping result between the SBFD time-frequency resource and the downlink time-frequency resource, the data transmission operation corresponding to the downlink time-frequency resource, the second determining module is specifically configured to:
in a case where a symbol corresponding to the SBFD time-frequency resource is a flexible (F) symbol, if the overlapping result is that the CORESET partially overlaps with the SBFD time-frequency resource or is located in the SBFD time-frequency resource, and the CORESET is a user equipment (UE)-specific CORESET,
when the CORESET overlaps with a random access channel occasion (RO) in the target slot in the time domain, if a UE to receive the downlink data is in a half-duplex time-division duplex (TDD) mode, determine that the data transmission operation corresponding to the downlink time-frequency resource comprises: prohibiting using the CORESET to transmit downlink data carried by the PDCCH.

33. The apparatus according to claim 25, wherein the downlink time-frequency resource comprises a control resource set (CORESET) corresponding to a physical downlink control channel (PDCCH);
when determining, based on the symbol type corresponding to the SBFD time-frequency resource and the overlapping result between the SBFD time-frequency resource and the downlink time-frequency resource, the data transmission operation corresponding to the downlink time-frequency resource, the second determining module is specifically configured to:
in a case where a symbol corresponding to the SBFD time-frequency resource is an UL symbol, if the overlapping result is that the CORESET is located in the SBFD time-frequency resource,
when the CORESET overlaps with a random access channel occasion (RO) in the target slot in the time domain, if a user equipment (UE) to receive the downlink data is in a full-duplex time-division duplex (TDD) mode, determine that the data transmission operation corresponding to the downlink time-frequency resource comprises: transmitting, based on the CORESET, downlink data carried by the PDCCH.

34. The apparatus according to claim 25, wherein the downlink time-frequency resource comprises a control resource set (CORESET) corresponding to a physical downlink control channel (PDCCH);
when determining, based on the symbol type corresponding to the SBFD time-frequency resource and the overlapping result between the SBFD time-frequency resource and the downlink time-frequency resource, the data transmission operation corresponding to the downlink time-frequency resource, the second determining module is specifically configured to:
in a case where a symbol corresponding to the SBFD time-frequency resource is an UL symbol, if the overlapping result is that the CORESET is located in the SBFD time-frequency resource,
when the CORESET overlaps with a random access channel occasion (RO) in the target slot in the time domain, if a user equipment (UE) to receive the downlink data is in a half-duplex time-division duplex (TDD) mode, determine that the data transmission operation corresponding to the downlink time-frequency resource comprises: prohibiting using the CORESET to transmit downlink data carried by the PDCCH.

35. The apparatus according to claim 25, wherein the downlink time-frequency resource comprises a control resource set (CORESET) corresponding to a physical downlink control channel (PDCCH);
when determining, based on the symbol type corresponding to the SBFD time-frequency resource and the overlapping result between the SBFD time-frequency resource and the downlink time-frequency resource, the data transmission operation corresponding to the downlink time-frequency resource, the second determining module is specifically configured to:
in a case where a symbol corresponding to the SBFD time-frequency resource is an UL symbol, if the overlapping result is that the CORESET is located in the SBFD time-frequency resource,
when the CORESET and a random access channel occasion (RO) in the target slot do not overlap in the time domain, if the CORESET is a common CORESET, determine that the data transmission operation corresponding to the downlink time-frequency resource comprises: transmitting, based on the CORESET, downlink data carried by the PDCCH; or
when the CORESET and the RO do not overlap in the time domain, if the CORESET is a user equipment (UE)-specific CORESET, and a UE to receive the downlink data is in a full-duplex time-division duplex (TDD) mode, determine that the data transmission operation corresponding to the downlink time-frequency resource comprises: transmitting, based on the CORESET, downlink data carried by the PDCCH.

36. The apparatus according to claim 25, wherein the downlink time-frequency resource comprises a control resource set (CORESET) corresponding to a physical downlink control channel (PDCCH);
when determining, based on the symbol type corresponding to the SBFD time-frequency resource and the overlapping result between the SBFD time-frequency resource and the downlink time-frequency resource, the data transmission operation corresponding to the downlink time-frequency resource, the second determining module is specifically configured to:
in a case where a symbol corresponding to the SBFD time-frequency resource is an UL symbol, if the overlapping result is that the CORESET is located in the SBFD time-frequency resource,
when the CORESET and a random access channel occasion (RO) in the target slot do not overlap in the time domain, if the CORESET is a user equipment (UE)-specific CORESET, and a UE to receive the downlink data is in a half-duplex time-division duplex (TDD) mode, determine that the data transmission operation corresponding to the downlink time-frequency resource comprises: prohibiting using the CORESET to transmit downlink data carried by the PDCCH.

37. The apparatus according to claim 25, wherein the downlink time-frequency resource comprises a control resource set (CORESET) corresponding to a physical downlink control channel (PDCCH);
when determining, based on the symbol type corresponding to the SBFD time-frequency resource and the overlapping result between the SBFD time-frequency resource and the downlink time-frequency resource, the data transmission operation corresponding to the downlink time-frequency resource, the second determining module is specifically configured to:
in a case where a symbol corresponding to the SBFD time-frequency resource is an UL symbol, if the overlapping result is that the CORESET partially overlaps with the SBFD time-frequency resource,
determine that the data transmission operation corresponding to the downlink time-frequency resource comprises: prohibiting transmitting downlink data carried by the PDCCH.

38. The apparatus according to claim 25, wherein the downlink time-frequency resource comprises a control resource set (CORESET) corresponding to a physical downlink control channel (PDCCH);
when determining, based on the symbol type corresponding to the SBFD time-frequency resource and the overlapping result between the SBFD time-frequency resource and the downlink time-frequency resource, the data transmission operation corresponding to the downlink time-frequency resource, the second determining module is specifically configured to:
in a case where a symbol corresponding to the SBFD time-frequency resource is an UL symbol, if the overlapping result is that the CORESET partially overlaps with the SBFD time-frequency resource,
if a user equipment (UE) to receive the downlink data is in a full-duplex time-division duplex (TDD) mode, determine that the data transmission operation corresponding to the downlink time-frequency resource comprises: transmitting, based on a first target resource, downlink data carried by the PDCCH; wherein the first target resource is an overlapping time-frequency resource between the CORESET and the SBFD time-frequency resource, wherein a size of the first target resource is greater than or equal to a size of the downlink data carried by the PDCCH.

39. The apparatus according to claim 25, wherein the downlink time-frequency resource comprises a control resource set (CORESET) corresponding to a physical downlink control channel (PDCCH);
when determining, based on the symbol type corresponding to the SBFD time-frequency resource and the overlapping result between the SBFD time-frequency resource and the downlink time-frequency resource, the data transmission operation corresponding to the downlink time-frequency resource, the second determining module is specifically configured to:
in a case where a symbol corresponding to the SBFD time-frequency resource is an UL symbol, if the overlapping result is that the CORESET partially overlaps with the SBFD time-frequency resource, and a user equipment (UE) to receive the downlink data is in a full-duplex time-division duplex (TDD) mode,
if a first target resource overlaps with a random access channel occasion (RO) in the target slot, when a size of a second target resource is greater than or equal to a size of downlink data carried by the PDCCH, determine that the data transmission operation corresponding to the downlink time-frequency resource comprises: transmitting, based on the second target resource, the downlink data carried by the PDCCH; wherein the first target resource is an overlapping time-frequency resource between the CORESET and the SBFD time-frequency resource, and the second target resource is a time-frequency resource in the first target resource that does not overlap with the RO.

40. The apparatus according to claim 25, wherein the downlink time-frequency resource comprises a reference signal time-frequency resource corresponding to a downlink channel state indication reference signal (CSI-RS) or a downlink positioning reference signal (PRS);
when determining, based on the symbol type corresponding to the SBFD time-frequency resource and the overlapping result between the SBFD time-frequency resource and the downlink time-frequency resource, the data transmission operation corresponding to the downlink time-frequency resource, the second determining module is specifically configured to:
in a case where a symbol corresponding to the SBFD time-frequency resource is a DL symbol, determine that the data transmission operation corresponding to the downlink time-frequency resource comprises: transmitting, based on the reference signal time-frequency resource, downlink data carried by the CSI-RS or the PRS.

41. The apparatus according to claim 25, wherein the downlink time-frequency resource comprises a reference signal time-frequency resource corresponding to a downlink channel state indication reference signal (CSI-RS) or a downlink positioning reference signal (PRS);
the apparatus further comprises a configuring module, configured to: in a case where a symbol corresponding to the SBFD time-frequency resource is an UL symbol,
if a user equipment (UE) to receive the downlink data is in a half-duplex time-division duplex (TDD) mode, prohibit configuring the CSI-RS or the PRS in the SBFD time-frequency resource; or
if the UE is in a full-duplex TDD mode, configure the CSI-RS or the PRS in the SBFD time-frequency resource.

42. The apparatus according to claim 25, wherein the downlink time-frequency resource comprises a reference signal time-frequency resource corresponding to a downlink channel state indication reference signal (CSI-RS) or a downlink positioning reference signal (PRS);
when determining, based on the symbol type corresponding to the SBFD time-frequency resource and the overlapping result between the SBFD time-frequency resource and the downlink time-frequency resource, the data transmission operation corresponding to the downlink time-frequency resource, the second determining module is specifically configured to:
in a case where a symbol corresponding to the SBFD time-frequency resource is a flexible (F) symbol,
when the reference signal time-frequency resource and a time-frequency resource corresponding to a dynamic grant (DG) physical uplink shared channel (PUSCH) overlap in the SBFD time-frequency resource, if a user equipment (UE) to receive the downlink data is in a full-duplex time-division duplex (TDD) mode, determine that the data transmission operation corresponding to the downlink time-frequency resource comprises: transmitting, based on the reference signal time-frequency resource, downlink data carried by the CSI-RS or the PRS; or
when the reference signal time-frequency resource and a time-frequency resource corresponding to repetition of a DG PUSCH overlap in the SBFD time-frequency resource, determine that the data transmission operation corresponding to the downlink time-frequency resource comprises: transmitting, based on the reference signal time-frequency resource, downlink data carried by the CSI-RS or the PRS; or
when the reference signal time-frequency resource and a time-frequency resource corresponding to a configured grant (CG) PUSCH overlap in the SBFD time-frequency resource, or the reference signal time-frequency resource overlaps with a time-frequency resource corresponding to repetition of the CG PUSCH, determine that the data transmission operation corresponding to the downlink time-frequency resource comprises: transmitting, based on the reference signal time-frequency resource, downlink data carried by the CSI-RS or the PRS; or
when the reference signal time-frequency resource and a time-frequency resource corresponding to a sounding reference signal (SRS) overlap in the SBFD time-frequency resource, determine that the data transmission operation corresponding to the downlink time-frequency resource comprises: transmitting, based on the reference signal time-frequency resource, downlink data carried by the CSI-RS or the PRS.

43. The apparatus according to claim 25, wherein the downlink time-frequency resource comprises a reference signal time-frequency resource corresponding to a downlink channel state indication reference signal (CSI-RS) or a downlink positioning reference signal (PRS);
when determining, based on the symbol type corresponding to the SBFD time-frequency resource and the overlapping result between the SBFD time-frequency resource and the downlink time-frequency resource, the data transmission operation corresponding to the downlink time-frequency resource, the second determining module is specifically configured to:
in a case where a symbol corresponding to the SBFD time-frequency resource is a flexible (F) symbol,
when the reference signal time-frequency resource and a time-frequency resource corresponding to a dynamic grant (DG) physical uplink shared channel (PUSCH) overlap in the SBFD time-frequency resource, if a user equipment (UE) to receive the downlink data is in a half-duplex time-division duplex (TDD) mode, determine that the data transmission operation corresponding to the downlink time-frequency resource comprises: prohibiting transmitting downlink data carried by the CSI-RS or the PRS; or
when the reference signal time-frequency resource and a time-frequency resource corresponding to a physical uplink control channel (PUCCH) overlap in the SBFD time-frequency resource, determine that the data transmission operation corresponding to the downlink time-frequency resource comprises: prohibiting transmitting downlink data carried by the CSI-RS or the PRS; or
when the reference signal time-frequency resource and a time-frequency resource corresponding to a random access channel occasion (RO) in the target slot overlap in the SBFD time-frequency resource, determine that the data transmission operation corresponding to the downlink time-frequency resource comprises: prohibiting transmitting downlink data carried by the CSI-RS or the PRS.

44. A data transmission apparatus, applied to a user equipment (UE), the apparatus comprising:
an identifying module, configured to identify configuration information for sub-band full-duplex (SBFD) time-frequency resources from resource transmission information sent by a base station;
a first determining module, configured to, in a case where an identification result is that the configuration information is successfully identified, determine, based on the configuration information, a SBFD time-frequency resource in a target slot and a downlink time-frequency resource for receiving downlink data in the target slot; wherein the target slot comprises an uplink (UL) slot, a downlink (DL) slot, or a special (S) slot, and the SBFD time-frequency resource occupies at least one symbol of the target slot in a time domain, and at least one physical resource block for each symbol in a frequency domain;
a second determining module, configured to determine, based on an overlapping result between the SBFD time-frequency resource and the downlink time-frequency resource, a data transmission operation corresponding to the downlink time-frequency resource; and
a performing module, configured to perform the data transmission operation in the target slot.

45. The apparatus according to claim 44, wherein the resource transmission information comprises system signaling or downlink control information (DCI).

46. The apparatus according to claim 44 or 45, wherein if the UE does not support SBFD, the identification result is that the configuration information fails to be identified.

47. An electronic device, comprising:
at least one processor, and
a machine readable storage medium storing machine executable instructions;
wherein by reading the machine executable instructions, the at least one processor is caused to perform the method according to any one of claims 1 to 21, or the method according to any one of claims 22 to 24.
